# EUROPÄISCHE PATENTANMELDUNG

(11) **EP 4 108 559 A1**
(43) Veröffentlichungstag der Anmeldung: **28.12.2022**
(21) Anmeldenummer: 22180438.8
(22) Anmeldetag: 22.06.2022
(51) Int. Cl.: B62K 5/06, B62J 43/13, B62J 43/20, B62K 7/04, B62K 19/02, B62J 17/083, B62M 6/65

(54) **LASTENFAHRRAD UND METHODE ZU SEINER RAHMENAUSLEGUNG**

(30) Priorität: 24.06.2021 DE 102021116326
(71) Anmelder: Faissner Petermeier Fahrzeugtechnik AG, 85748 Garching (DE)
(72) Erfinder: Faißner, Manfred, 83527 Kirchdorf (DE); Lorz, Florian, 81673 München (DE)
(74) Vertreter: Cremer & Cremer

(57) **Zusammenfassung**

Ein Lastenfahrrad 1 weist einen bodenseitigen Versteifungsrahmen 5 auf. Der Versteifungsrahmen 5 hat einen Querträger 53 und einen mittleren Zentralträger 51, wobei letzterer in einem, bezüglich des Lastenfahrrads 1, vorderen Bereich 17 vorhanden ist. Zwei Radträger 55, 57 des Versteifungsrahmens 5 verlaufen parallel zum Zentralträger 51. Jeder der beiden Radträger 55, 57 hat einen eigenen, zwischen Seitenwänden 61, 63 eines Radträgers 55, 57 angeordneten Radnabenmotor 81, 83. Hierdurch ist der Versteifungsrahmen 5 verwindungssteifer ausgeführt. Der Radnabenmotor 81, 83 bildet nämlich eine Verbindung zwischen den Seitenwänden 61, 63. Soll ein entsprechendes Lastenfahrrad 1 mit einem bodenseitigen Versteifungsrahmen 5 hergestellt werden, wird eine relative Verwindungssteifigkeit zweier Radträger 55, 57 des Rahmens 5 zueinander durch Eigensteifigkeiten hergestellt, die durch einen in einem der Radträger 55, 57 angeordneten Antriebsmotor, z. B. einem Radnabenmotor 81, 83, hergestellt sind.

## Beschreibung

Die vorliegende Erfindung behandelt ein Lastenfahrrad mit einem bodenseitigen Versteifungsrahmen.

Des Weiteren behandelt die vorliegende Erfindung eine Methode, wie ein sehr leichter Rahmen eines Lastenfahrrades ausgeführt werden kann, der trotzdem für sehr hohe Lasten bei gleichzeitig hoher Steifigkeit bei einem guten Fahrverhalten gestaltet ist.

Mit anderen Worten, die vorliegende Erfindung behandelt ein Lastenfahrrad nach dem Oberbegriff von Anspruch 1 sowie eine Methode zur Gestaltung eines solchen Rahmens für ein Lastenfahrrad nach dem Oberbegriff von Anspruch 17.

### Technisches Gebiet

Lastenfahrräder, die auch als Transportfahrräder bezeichnet werden können, sind Fahrräder, die speziell zum Transport von Gütern und/oder Personen dienen. Im Allgemeinen werden die Lastenfahrräder in unterschiedliche Gruppen unterteilt.

So werden gemeinhin einspurige Lastenräder bzw. Lastenfahrräder, bei welchen die Laufräder in einer Ebene genau hintereinander angeordnet sind, von mehrspurigen Lastenfahrrädern unterschieden. Bei mehrspurigen Lastenfahrrädern liegen die Laufräder in mehr als einer Ebene. Außerdem weisen mehrspurige Lastenfahrräder mindestens zwei Achsen und drei Laufräder auf. Es sind aber auch mehrspurige Lastenfahrräder bekannt, die zwei vordere und zwei hintere Laufräder haben.

Lastenfahrräder haben ein Gesamtgewicht, das sich aus dem Leergewicht und der (maximal möglichen) Zuladung zusammensetzt und zumeist durch ein maximal zulässiges Gewicht begrenzt ist. Unter Zuladung wird üblicherweise die Summe des Gewichts verstanden, die sich aus dem Gewicht des Fahrers des Lastenfahrrads und dem Gewicht der geladenen Güter/Personen zusammensetzt. In der Norm DIN 79010:2020-02 werden zulässige Gesamtgewichte von 250 Kilogramm (kg) für einspurige und 300 kg für mehrspurige Lastenfahrräder erwähnt.

Solche Lastenfahrräder können mit einer elektrischen Antriebsunterstützung ausgestattet sein. Die Norm DIN 79010:2020-02 beschäftigt sich hierbei insbesondere mit mehrspurigen Lastenfahrrädern mit einer maximalen Breite von 2 Metern (m), einem zulässigen Gesamtgewicht von maximal 300 kg, einer Nenndauerleistung (der elektrischen Zusatzleistung) von maximal 250 Watt (W) und einer Geschwindigkeit von bis zu 25 Stundenkilometer (km/h). Solche Lastenfahrräder können z. B. über deren Radstand, d. h. dem Abstand zwischen den Radaufstandspunkten des Fahrzeugs parallel zu einer als x-Achse zu bezeichnenden Längsachse und horizontal bei einem Radlenkwinkel von Null, klassifiziert werden. Ein anderes Maß zur Klassifizierung von Lastenfahrrädern ist die Spurweite. Als Spurweite wird der Abstand zwischen den Radaufstandspunkten der beiden Räder einer Einzelradachse, gemessen parallel zu einer als y-Achse zu bezeichnenden Längsachse, die quer zu x-Achse angeordnet ist, auf einer horizontalen Stellfläche verstanden.

Durch in der Norm DIN 79010:2020-02 festgelegte Prüfverfahren, insbesondere für die Bremsen des Lastenfahrrads, soll eine ausreichende Betriebssicherheit sichergestellt werden. Weitere Aspekte bzw. Themengebiete der Prüfung sind die Kipp- bzw. Lenkstabilität von Lastenfahrrädern. Anhand der Prüfvorschriften und der Erfüllung dieser Prüfvorschriften lässt sich nach weiteren Beurteilungskriterien bestimmen, ob ein bestimmtes Fahrzeug als Last(en)fahrrad bezeichnet werden darf.

Mitunter sind weitere gesetzliche Vorgaben zu beachten, damit ein Betrieb eines entsprechenden Lastenfahrrads im Straßenverkehr überhaupt zulässig ist. So werden durch einige Gesetze, Normen, Verordnungen sowie Vorschriften maximale Abmessungen von Lastenfahrrädern im Straßenverkehr vorgeschrieben. Die maximale Breite wird gemäß § 32 (9) StVZO (Deutschland) mit 1 m für Fahrräder mit Hilfsmotor angegeben, wobei die Breite jedoch 2,00 m für dreirädrige und vierrädrige Kraftfahrzeuge betragen darf. In anderen Staaten als Deutschland gelten zum Teil andere Begrenzungen. Beispielhaft sei die Republik Österreich genannt. Dort wird ein maximales Ladegewicht von 250 kg für mehrspurige Fahrräder gem. § 7 (1) der Fahrradverordnung der Republik Österreich vorgeschrieben.

Weitere Informationen über verschiedene Arten von Lastenfahrrädern gehen z. B. aus der Veröffentlichung "Sicher unterwegs mit dem Transport- und Lastenfahrrad", Information 208-055 der Deutschen Gesetzlichen Unfallversicherung (DGUV), Ausgabe November 2019 hervor. In jener Broschüre wird die Gruppe der Lastenfahrräder weiter differenziert, z. B als "Pedelecs", d. h. als Fahrräder mit elektrischer Assistenz, und als "S-Pedelcs". "Pedelecs" haben einen integrierten Elektroantrieb, der das Treten bauartbedingt bis maximal 25 km/h mit einer Nenndauerleistung bis maximal 250 W unterstützt. Diese können eine reinelektrische Anfahrhilfe bis zu einer maximalen Geschwindigkeit von 6 km/h aufweisen. Bei "S-Pedelecs" unterstützt der Motor das Treten bauartbedingt bis max. 45 km/h mit einer Motor-Nenndauerleistung bis 4.000 W (4 kW). Die Motorleistung ist jedoch - als ein weiteres Kriterium - auf das Vierfache der Tretleistung des Radfahrenden begrenzt, sodass viele "S-Pedelecs" gar nicht die maximale Motor-Nenndauerleistung ausschöpfen. Ein "S-Pedelec" gilt - aufgrund seiner Leistung - als Kraftfahrzeug und benötigt u. a. eine Betriebserlaubnis als Kleinkraftrad.

### Stand der Technik

Ein dreirädriges Lastenfahrrad gemäß der Patentanmeldung DE 101 45 259 A1 (Anmelder: Franz Josef Czerny; Offenlegungstag: 15.04.2004) weist einen Rahmen auf, an dem hinten, zwischen zwei seitlich angebrachten Rädern ein Gestell bzw. Fahrradkorb, z. B. für eine Sitzgruppe, wie bei einer Fahrradrikscha, angebracht ist. Darunter befinden sich eine Batterie und ein elektrischer Antriebsmotor mit einem Kettenantriebsrad. Über das Kettenantriebsrad kann eine Kette ein Kettenzahnrad auf der Radachse antreiben. Außerdem ist ein Freilauf vorgesehen. Dank des Antriebs ist ein normaler Pedalbetrieb möglich.

In dem chinesische Gebrauchsmuster CN 87 208 522 U (Inhaber: Yang Beiyan; Veröffentlichung der Eintragung: 30.12.1987) wird vorgeschlagen, ein dreirädriges Lastenfahrrad für den Personentransport mehrteilig aus vorderem Rahmenteil, hinterem Rahmenteil, Pedal und Rücksitz derart zu gestalten, dass diese an Scharnieren raumsparend zusammengeklappt werden können.

Das deutsche Gebrauchsmuster DE 20 2019 100 638 U1 (Inhaberin: b & p engineering mobility GmbH; Eintragungstag: 22.02.2019) beschäftigt sich mit einem bodenseitigen Träger für ein vierrädriges Lastenfahrrad, dessen Hinterachse und dessen Vorderachse im Endbereich des Trägers, gegebenenfalls auch über Federn, angebracht sein sollen, um die Fahrstabilität und damit die Geländegängigkeit zu steigern. Die Hinterachse soll mit dem Längsträger vorzugsweise fest verbunden sein. Zwischen der Vorderachse und dem Längsträger ist ein Drehgelenk vorgesehen, dessen Drehachse in Längsrichtung des Lastenfahrrads verläuft. Ein elektrischer Hilfsmotor soll sich hinter einer Sattelstütze auf dem Längsträger befinden. Ebenfalls hinter der Sattelstütze soll ein Lastenaufnahmebehälter angeordnet sein. In dem Gebrauchsmuster wird neben weiteren Vorschlägen auch der Vorschlag gemacht, innerhalb eines Lastenaufnahmebehälters den elektrischen Hilfsmotor zu befestigen.

Ein erster Typ elektrisch angetriebenes Dreirad-Stadtfahrzeug für eine Person, die den Bedarf nach Transportmöglichkeiten hat, ist der WO 98/024 681 A1 (Anmelderin: CITYMOBIL AG; Veröffentlichungsdatum: 11.06.1998) zu entnehmen. Bei dem Fahrzeug soll die Fahrerkabine schwenkbar und verwindbar sein. Ein hinterer Karosserieteil, der einen geräumigen Kofferraum von ca. 150 Liter bieten soll, ist über eine Schwenkwelle mit dem vorderen Karosserieteil verbunden und kann so statischer bleiben.

Das deutsche Patent DE 10 2017 005 699 B3 (Patentinhaberin: Rytle GmbH; Patentveröffentlichungstag: 28.06.2018) stellt in vielen verschiedenen Ansichten ein Transportfahrrad bzw. Lastenfahrrad vor, bei dem ein Teil des Fahrrads eine Transportbox ist, die zwischen zwei seitlichen Radträgern angeordnet ist. Der Fahrradrahmen setzt sich aus vielen Rohren zusammen. Ein Fahrradfahrerraum wird auf einer der beiden Längsseiten durch eine seitlich begrenzende Tragstrebenanordnung stabilisiert. Die gebogenen Rohre verlaufen zum Teil parallel zueinander. Jedes Hinterrad ist durch eine als Dreibein ausgestaltete Strebenanordnung an einer so genannten Hebeeinrichtung befestigt, wobei Akkumulatoren an der Strebenanordnung befestigt sind, mithin seitlich neben der Transportbox. Ein Fahrrad mit einem Rahmen, wie er in der DE 10 2017 005 699 B3 vorgestellt wird, stellt einen gewissen Aufwand bei der Herstellung dar und dürfte aufgrund der hohen Anzahl (Metall-)Rohre im Vergleich mit anderen denkbaren Fahrradrahmenkonstruktionen schwer sein.

Eine ähnliche, dreiradartige Form eines Lastenfahrrads wie in der DE 10 2017 005 699 B3 wird in den Figuren der EP 3 772 450 A1 (Anmelderin: Onomotion GmbH; Veröffentlichungstag: 10.02.2021), auch als DE 10 2019 121 141 A1 veröffentlicht, gezeigt. Die Anmeldung erläutert, dass es besonders vorteilhaft für den Fahrer des Lastenfahrrads sei, wenn eine Bodeneinheit und ein Dachelement so beabstandet sind, dass der Abstand der Körpergröße einer Bedienperson entspricht oder dass sogar ein höherer Abstand zwischen den Teilen des Lastenfahrrads geschaffen sei. D. h., ein solches Lastenfahrrad strebt in die Höhe bei einer Breite zwischen 1,70 m und 2,00 m. Wird berücksichtigt, dass das Lastenfahrrad eine Vollverkleidung aufweist, bedingt die Lastenfahrradkonstruktion ein gewisses Mindestgewicht - schätzungsweise 230 kg bis 240 kg. Ein hoher Schwerpunkt sorgt bei diesen Abmessungen und bei der Masse für ein kippliges Fahrgefühl für den Fahrradfahrer.

Die zuvor genannten Druckschriften gelten mit ihrer Benennung als vollumfänglich in vorliegende Erfindungsbeschreibung inkorporiert. Hierdurch soll vermieden werden, nicht mehr erneut und wiederholt allgemein bekannte Zusammenhänge zwischen Antrieb, Lastenfahrradrahmen und Rahmenbedingungen für eine Lastenfahrrad zu erörtern, sondern durch Verweis auf die Druckschriften als ebenfalls definiert für vorliegende Erfindung ansehen zu dürfen.

### Aufgabenstellung

Nicht nur allein aufgrund der Normensituation bzw. einzelner gesetzlicher Vorschriften, sondern schlichtweg aus praktischen Erwägungen sollte ein Lastenfahrrad möglichst leicht sein, damit dem Fahrer des Lastenfahrrads die Möglichkeit gegeben ist, Lasten mit seinem Lastenfahrrad zu transportieren und trotzdem ein Gewicht unterhalb eines Maximalgewichts, z. B. von weniger als 300 kg, vorzugsweise sogar weniger als 200 kg, einhalten zu können. Wird das Lastenfahrrad aber auf der anderen Seite zu filigran konzipiert, kann es nicht mehr als Lastenfahrrad genutzt werden. Bei zu filigran gestalteten Lastenfahrrädern kann die Situation eintreten, dass die Beladung des Lastenfahrrads oder ein zu starker Antritt des Fahrenden zu mechanischen Schäden an dem Lastenfahrrad führt.

In dieser Situation besteht ein Bedarf nach einem Lastenfahrrad, das den Namen verdient und trotzdem ausreichend alltagstauglich ist.

### Erfindungsbeschreibung

Die erfindungsgemäße Aufgabe wird durch ein Lastenfahrrad nach Anspruch 1 gelöst, ein geeignetes Dimensionierungsverfahren bzw. Verfahren zur Gestaltung eines (Lasten-)Fahrrads mit seinem Rahmen lässt sich Anspruch 17 entnehmen. Vorteilhafte Weiterbildungen lassen sich den abhängigen Ansprüchen entnehmen.

Bodenseitig des Lastenfahrrads gibt es einen Rahmen, der eine Versteifung für das Lastenfahrrad zur Verfügung stellt.

Hilfreich ist es, wenn das Lastenfahrrad sowohl durch Muskelkraft als auch, zumindest in unterstützender Weise, elektrisch angetrieben werden kann. Der Rahmen, der die Funktion eines Versteifungsrahmens übernimmt, ist ein Anbaurahmen, an dem weitere Komponenten des Lastenfahrrads angebracht werden können.

Der Rahmen setzt sich aus mehreren Rahmenteilen zusammen. Neben einem Zentralträger, der vorzugsweise im vorderen, bodenseitigen Bereich des Lastenfahrrads angesiedelt ist, gibt es einen Querträger. Als Teil des Rahmens gibt es zwei parallel zum Zentralträger verlaufende Radträger. Als parallel verlaufend werden die Radträger deswegen bezeichnet, weil sie, würde jeweils eine (gedachte) Achse durch die Längserstreckung des einen Radträgers gezogen werden, aufgrund ihrer Achsen parallel zu einer (ebenfalls gedachten) Achse des Zentralträgers verlaufen.

In wenigstens einem der beiden Radträger, die einen Raum zwischen sich aufspannen, ist ein Motor, und zwar ein Radnabenmotor, angesiedelt. Es kann auch gesagt werden, der Radnabenmotor verbindet die Seiten des Radträgers. Der Motor ist ein Verbinder von einer Seite des ersten Radträgers zu einer zweiten Seite des ersten Radträgers. Vorteilhafterweise sind zwei Motoren vorhanden, jeder (von denen) ist ein Verbinder im Inneren seines Radträgers, also der erste Motor im Inneren des ersten Radträgers und der zweite Motor im Inneren des zweiten Radträgers.

Der Radnabenmotor hat ein Eigengewicht. Der Radnabenmotor hat idealerweise ein Motorgehäuse, das vorzugsweise eine geschlossene, ringförmig angeordnete Masse aufweist. Der Radnabenmotor ist in einer Richtung entlang des Motorgehäuses verwindungssteif, insbesondere aufgrund seiner Materialien und seiner Massen.

Ein Rahmen gilt im Fahrradbau, insbesondere im Anwendungsgebiet der Lastenfahrräder, als verwindungssteif, wenn er gewisse Verbiegungen und Verzüge nicht überschreitet. Nach einem Kriterium ist es wünschenswert, das Lastenfahrrad so auszuführen, dass bei einer maximalen Beladung, d. h. bei einer zu transportierenden Last von z. B. 250 kg oder z. B. von sogar 300 kg, für die das Lastenfahrrad ausgelegt ist, die Last eine Durchsenkung an einer beliebigen Stelle des Rahmens, insbesondere im Bereich einer Fahrradsattelaufnahme, von nicht mehr als 6 mm, vorzugsweise nicht mehr als 5 mm erzielt. Andere Grenzangaben zur Verwindungssteifigkeit werden anhand einer maximalen Verschiebung des Radaufstandspunktes unter Querkraft definiert. Grenzwerte für solche Belastungen (Verschiebung des Radaufstandspunkts unter Querkraft) betragen 7 mm, idealerweise sogar weniger als 5 mm, bei einer Querkraft von 1.000 N.

Der Zentralträger und/oder der Radträger ist ein stranggepresstes Hohlprofil.

Zur Herstellung einer Verwindungsstabilität bei einem Lastenfahrrad, das einen bodenseitigen Rahmen besitzt, kann eine Verwindungssteifigkeit zwischen zwei Radträgern des Rahmens durch eine Eigensteifigkeit eines in einem der Radträger angeordneten Antriebsmotors, z. B. einem Radnabenmotor, hergestellt werden.

Nachfolgend werden vorteilhafte Ausgestaltungen und Weiterbildungen dargelegt, die für sich gesehen, sowohl einzeln als auch in Kombination, ebenfalls erfinderische Aspekte offenbaren können.

Die Radträger auf der einen Seite und der Zentralträger auf der anderen Seite sind zueinander versetzt. Als Verbindungsstück zwischen den Radträgern und dem Zentralträger verläuft der Querträger in einem 90° Winkel zu der Längserstreckung der Radträger und des Zentralträgers.

In einer Ausgestaltung können die Radträger, der Querträger und der Zentralträger so arrangiert sein, dass die Radträger auf einer ersten Seite des Querträgers angeordnet sind, während der Zentralträger auf einer anderen Seite des Querträgers angeordnet ist. Der Zentralträger weist von dem Querträger weg in die eine Richtung, während die Radträger von dem Querträger weg in eine andere Richtung, insbesondere eine entgegengesetzte Richtung, weisen.

Es kann auch gesagt werden, in einer Ausgestaltung erstreckt sich, ausgehend von dem Querträger, der Zentralträger in eine entgegengesetzte Richtung wie die Radträger.

Lasten, die im Betrieb des Lastenfahrrads auf das Lastenfahrrad einwirken, gleichen sich um den Querträger herum besser aus. Torsionen, die an Rändern des Querträgers durch die Radträger einwirken, werden durch eine weitere Torsion, die in einem Zentrum des Querträgers eingeleitet wird, (zumindest teilweise) kompensiert.

In einer alternativen Ausgestaltungsform kann die Verwindungssteifigkeit des Radnabenmotors, ganz allgemein gesprochen, des Motors, dazu genutzt werden, den Versteifungsrahmen durch eine Verbindung des einen Radträgers zu dem anderen Radträger über den Motor ebenfalls verwindungssteif zu gestalten. Hierbei wird vorteilhafterweise der Motor schmal und lang ausgeführt, sodass er von einem Radträger bis zum nächsten Radträger reicht und zwei Räder, jedes Rad auf einer Seite des Motors, antreiben kann.

Der Motor, z. B. in Gestalt des Radnabenmotors, verstärkt die Verbindung, insbesondere der Seitenteile eines Radträgers, über den Querträger.

Solange der Motor noch nicht eingebaut ist, besitzt das Lastenfahrrad noch nicht die ausreichende Stabilität für die aufzunehmende Last. Erst durch den Einbau des Motors, bzw. der beiden Motoren, wird der Rahmen ausreichend stabil.

Die einzelnen Rahmenteile können wenigstens zum Teil durch stranggepresste Metallbauteile, z. B. durch Aluminiumbauteile, geschaffen sein. Solche Bauteile sind z. B. Vier-Kant-Profile, aus denen die einzelnen Träger, wie z. B. der Zentralträger und/oder der bzw. die Radträger, hergestellt sein können.

Um eine möglichst große erlaubte Zuladung einzuräumen, ist es wünschenswert, die Träger des Versteifungsrahmens möglichst filigran auszulegen. Durch eine zusätzliche Versteifung, die der Radnabenmotor zwischen seinen Aufhängungspunkten schafft, kann eine Wandstärke des Trägers, d. h. insbesondere des Radträgers, reduziert werden, nämlich auf eine Wandstärke in einem Bereich zwischen 2 mm und 6 mm, z. B. nicht mehr als 4 mm oder 5 mm. Der Zentralträger muss so dimensioniert sein, dass eine übliche Gewichtsbelastung durch einen Fahrer des Lastenfahrrads nicht zur Überschreitung der gesteckten Verwindungsgrenzen (z. B. von weniger als 5 mm, 6 mm oder eventuell auch 7 mm) führt. Der Zentralträger kann ein stranggepresstes Hohlprofil mit einer maximalen Wandstärke von 5 mm sein; werden die Stärken weiter optimiert, so können Wandstärken von gerade einmal 3 mm für zumindest einige der Teile, z. B. für die Radträger, reichen. D. h., es kann ein (Versteifungs-)Rahmen geschaffen werden, bei dem die Dicken der Wände im Bereich zwischen 3 mm und 5 mm liegen. Produktionstechnisch einfacher ist es, wenn alle Teile des Versteifungsrahmens aus gleichen Hohlprofilen geschaffen sind. Zur Gewichts- und Steifigkeitsoptimierung können die Teile des Versteifungsrahmens aber auch unterschiedlich dick ausgestaltet sein.

Eine weitere Gewichtsersparnis bei Aufrechterhaltung der Verwindungssteifigkeit ist dadurch möglich, dass der Zentralträger höher als breiter geformt ist. So kann ein Träger, wie der Zentralträger, mit zwei gleichen Seiten ausgestattet sein. Werden die einzelnen Breiten der Seiten, d. h. einer Oberseite, einer Unterseite und den beiden Seitenwänden erste Seitenwand und zweite Seitenwand, miteinander verglichen, so können die Breiten der Seitenwände größer sein als die Breiten der Oberseite und der Unterseite.

Durch Versuche ist ermittelt worden, dass die Oberseite eine ausreichende Stabilität bietet, wenn sie als Aluminiumbauteil eine Breite von maximal 60 mm besitzt.

Der Zentralträger kann in einer vorteilhaften Ausgestaltung des Lastenfahrrads eine Stütze für einen Fahrradsitz sein, z. B. für den Fahrer des Lastenfahrrads, also für einen Fahrradsattel.

In einer vorteilhaften Ausführungsform kann das Lastenfahrrad auch als Fahrrad mit zwei Hinterrädern bezeichnet werden, das vorzugsweise mit einem im hinteren Bereich angeordneten Ladebereich ausgestattet ist. Für ein solches Lastenfahrrad kann die Bezeichnung Schmalspurfahrzeug verwendet werden.

Vorteilhafterweise ist zumindest einer der Radnabenmotoren, wobei zu einem gleichmäßigen (Hilfs-)Antrieb des Lastenfahrrads idealerweise beide Hinterräder elektrisch angetrieben sind, in einem der beiden Hinterräder platziert. Der Radnabenmotor ist in Querrichtung zu einer Fahrtrichtung des Lastenfahrrads eingebaut.

Auf diese Weise ist es möglich, einen der Radnabenmotoren als Antrieb für eines der beiden Hinterräder des Lastenfahrrads zu nutzen. Vorzugsweise handelt es sich um einen Hilfsmotor, der nur unterstützend für den Fahrer des Lastenfahrrads wirkt. Der Radnabenmotor ist als Antrieb für ein Hinterrad gestaltet.

Werden also zwei Radnabenmotoren in dem Lastenfahrrad verbaut, kann jeder der Radnabenmotoren jeweils an einem der beiden Radträger befestigt sein. Jeder Radträger hat seinen eigenen Radnabenmotor. So ein Radnabenmotor ist vorzugsweise punktkonzentriert an der Seitenwand des Radträgers befestigt. Die Radnabenmotoren lagern an einer Stelle an einer Seitenwand an. Die Versteifung erfolgt punktuell.

Beide Motoren können so angeordnet sein, dass sie zueinander fluchtend an dem Versteifungsrahmen angebracht sind. Handelt es sich bei den Motoren um Radnabenmotoren, können diese fluchtend zueinander und je einer an einem der Radträger befestigt sein.

Der sich in der Nähe des Bodens befindende, also bodenseitige Versteifungsrahmen kann als Anbaurahmen genutzt werden. Er kann eine Basis für ein vor und hinter einem Fahrersitz angeordnetes Gestänge bilden. Der Raum, der für die Aufnahme des Fahrers bestimmt ist und z. B. einen Fahrradsattel trägt, kann durch den Anbaurahmen und durch das daran angebrachte Gestänge gebildet sein. Das Gestänge fördert die Steifigkeit. Dies führt dazu, dass der Zentralträger leichter dimensioniert bzw. ausgelegt (im Sinne von gestaltet) werden kann.

Das Gestänge kann wie ein Käfig ausgestaltet sein. Der Käfig kann der Tragrahmen für Karosserieteile des Lastenfahrrads sein. Der Käfig bietet Montagestellen für Karosserieteile. Der Käfig wird zur Bildung von Montagestellen genutzt.

Radzentren der Antriebsräder, insbesondere der Hinterräder, können so gestaltet sein, dass sie an Zungen zu befestigen sind, wodurch die Radzentren höher positioniert sein können im Vergleich zu den Radträgern. Die Achsen in den Radträgern sind näher zum Boden hin geführt als die Befestigungsstellen für die Radzentren, insbesondere für die Radnabenmotoren. Hierdurch ist es möglich, den Versteifungsrahmen näher zum Boden hin anzuordnen, sodass die, z. B. in einer Transportbox einzubringenden, Lasten möglichst bodennah transportiert werden können. Das Lastenfahrrad erfährt nur geringe Hebelkräfte durch die Last, z. B. in Kurvenfahrten.

Eine zweite, zu der Zungenpositionierung (siehe oben) alternative Anbringung der Räder, insbesondere der Hinterräder, kann durch eine Positionierung im Inneren der Radträger erfolgen. Die Radzentren werden im Inneren befestigt.

Eine weitere Stabilität für den Versteifungsrahmen schafft eine Führungsschiene, die vorzugsweise auf einer Oberfläche eines Trägers entlanggeführt ist. Ist der Träger (z. B. ein Radträger, z. B. der Querträger, z. B. der Zentralträger) höher als breit, so kann der Träger sogar so hoch sein, dass mehr als eine Führungsschiene an dem Träger vorhanden ist. Z. B. können zwei Führungsschienen übereinander auf einer Seite des Trägers verlaufen. Bei einer solchen Ausführungsform sind auf einer zu einer Lastfläche zugewandten Seite eines Radträgers zwei Führungsschienen angebracht.

Die Führungsschiene kann für verschiedene Aufgaben und Funktionen gestaltet sein.

Eine Führungsschiene kann als Führung für Kabel, z. B. zu einem der Motoren, genutzt werden. Eine solche Führungsschiene kann also als Kabelkanal bezeichnet werden.

Die Führungsschiene kann aber auch als Schiebeschiene für die Aufnahme von Haken oder Winkel gestaltet sein, wodurch eine Transportbox verankert werden kann. Eine T-Nut-artige Führungsschiene kann eine Aufnahme für Führungssteine sein, die an einer Transportbox angebracht sind. Die Transportbox kann mithilfe der Führungssteine in die Führungsschiene eingebracht werden und tiefer in den Transportbereich des Lastenfahrrads eingeschoben werden, indem die Führungssteine in der Führungsschiene verschoben werden. Die Führungsschiene stellt in einem solchen Fall einen Verankerungskanal dar. Ein Behältnis zur Aufnahme einer Traglast wird auf diesem Weg mit dem Versteifungsrahmen verankert.

Die Hinterräder können als Speichenräder ausgeführt sein, z. B. in der Größe von 16 Zoll, 17 Zoll, 18 Zoll oder auch 21 Zoll. Andere Zollgrößen der Hinterräder können bei 26 Zoll oder bei 28 Zoll liegen. Selbst so ein ungewöhnliches Maß wie 30 Zoll sind denkbar. Das Hinterrad sollte nicht größer als ein 30-Zoll-Rad sein.

Seitlich zu dem Zentralträger kann ein zusätzlicher Stützrahmen vorhanden sein. Der Stützrahmen kann von einem vorderen Punkt des Zentralträgers (mit anderen Worten: eine in Fahrtrichtung vorne angesiedelte Stelle bzw. ein im vorderen Bereich des Lastenfahrrads liegender Punkt) zu dem Querträger oder zu den Radträgern führen. Auch durch solche konstruktiven Ausführungen kann die Gesamtverwindungssteifigkeit überhaupt erst hergestellt sein.

Der Zentralträger schafft eine Steifigkeit, die dazu genutzt werden kann, dass der Zentralträger ein Träger für eine Antrittskurbel ist und/oder ein Träger für einen Generator ist. Die Anordnung des Generators und/oder der Antrittskurbel im Bereich des Zentralträgers trägt zu einem Lastausgleich zwischen Transportlast und Antriebs- bzw. Antrittsdrehmoment (Antritt des Fahrradfahrers), insbesondere durch einen Kurbeltrieb wie eine Radkurbel, bei.

Die Radträger können über eine Bodenplatte miteinander verbunden sein. Eine Bodenplatte kann zwischen den Radträgern vorhanden sein, sogar an den Radträgern befestigt sein. Die Befestigung der Bodenplatte kann so gestaltet sein, dass die Bodenplatte fluchtend zu den Unterseiten der Radträger verläuft, sozusagen als Fortsetzung der Unterseiten der Radträger. Die Radträger sind über die Bodenplatte miteinander verbunden.

Zumindest eines der Hinterräder, vorteilhafterweise beide Hinterräder, können unmittelbar und direkt durch Radhalterungen als Teile der Radträger getragen sein. So eine Radhalterung kann eine einstückige Radhalterung des Radträgers sein. Die Radhalterung ist in dem Radträger aufgenommen und wird von diesem gehalten.

Die Radhalterung kann als ein zusammenhängendes Bauteil gestaltet sein. Eine Radhalterung kann Teil des Radträgers, also einstückig sein. Die Radhalterung kann Teil des Radträgers sein. Die Radhalterung kann aus dem Radträger hervortreten. Der Radträger kann eine flanschartige Aufnahme für den Radnabenmotor sein. Genauer gesagt, die Radhalterung stellt die flanschartige Verbindung zu dem Radnabenmotor.

In einem Radträger sind also vorteilhafterweise Ausnehmungen, die dafür vorgesehen sind, ein Rad, wie z. B. ein Hinterrad, hindurchtreten zu lassen. Die bodenseitige Ausnehmung hat eine gewisse Größe, d. h., die Ausnehmung, die auf der unteren Seite ist, hat eine Größe, die größer ist als das Rad, die also als eine erste Größe bezeichnet werden kann. Die Oberseite des Radträgers hat auch eine Ausnehmung. Beide Ausnehmungen können in ihren Abmessungen identisch sein; es ist aber auch möglich, unterschiedlich große Ausnehmungen auf der Oberseite und auf der Unterseite des Radträgers vorzusehen. Die erste Größe und eine zweite Größe sind in dem zweiten Fall zueinander etwas unterschiedlich. Die Ausnehmung(en) soll/sollen so groß sein, dass ein Rad in diese Löcher, die durch die Ausnehmungen geschaffen sind, in Bezug auf einen (wie auch immer) gearteten Schnitt hineinpasst. Sitzt das Radzentrum z. B. mittig in dem Radträger, so ist das Rad entlang von (gedachten) Schnitten (im Sinne von Kreissegmenten, die aus dem Radträger herausstehen) kleiner bzw. kürzer als der Durchmesser. Die Ausnehmung kann so gestaltet sein, dass das Rad an der Stelle der Ausnehmung aus dem Träger herausgucken kann. Natürlich bedarf es eines gewissen Zuschlags bei den Abmessungen. D. h., die Breite kann ein wenig breiter sein, z. B. 10% mehr. Mit anderen Worten, im Wesentlichen entspricht die Größe der Ausnehmung der Radbreite im Bereich des Austritts aus dem Radträger. Als im Wesentlich gleiche Größe wird ein Verhältnis der Radbreite oder einer Felgenbreite zu einer Ausnehmung angesehen, bei der die Größe des Lochs im Radträger wenige Millimeter über die Breite oder Länge des Rades hinausragt. Eine solche Gestalt hat die Wirkung, dass der Radträger auch in unmittelbarer Nachbarschaft zum Rad ein Stück Wand der Oberseite und der Unterseite hat, wodurch der Radträger (noch weitergehend) versteift wird.

Der Raum, der für die Aufnahme eines Teils des Rad, z. B. des Hinterrads, vorgehalten wird, kann durch einen Radschacht gebildet sein, der nach innen des Radträgers, aus der Wand kommend eine Hülle für das Rad bildet. Der Radträger kann mehrwandig gestaltet sein. Eine Wand ist eine Seitenwand des Radträgers. Hierzu abschnittsweise parallel verlaufend kann eine Innenwand gegeben sein, die durch eine Wand des Radschachts geschaffen ist. Der Radschacht kann sich in einer vorteilhaften Ausgestaltung unmittelbar an die Wand (z. B. an die Oberfläche bzw. an die Unterfläche) anschließen.

Je nach den Anforderungen an die (elektrochemischen) Speicher und an die Speichergröße der elektrochemischen Speicher, z. B. in Gestalt von Akkumulatoren, können mehrere Akkumulatoren an oder in dem Rahmen des Lastenfahrrads verteilt sein. Z. B. ist es möglich, in jedem Radträger wenigstens einen Akkumulator einzubauen. Der Zentralträger kann eine weitere Stelle für die Aufnahme eines Akkumulators bieten. Sollen größere Akkumulatoren Teil des Lastenfahrrads werden, so können Akkumulatoren auch auf den Trägern angeordnet werden.

Die zuvor dargestellten Kombinationen und Ausführungsbeispiele lassen sich auch in zahlreichen weiteren Verbindungen und Kombinationen betrachten.

Aufgrund der Stärkung der Querstabilität mithilfe des Radnabenmotors wird eine Verwindungsneigung des Rahmens erschwert. Der Motor trägt bzw. die Motoren tragen zur Stabilität bei.

Obwohl die einzelnen Bauteile des Versteifungsrahmens (eigentlich) zu filigran, vorrangig aus Gründen einer Gewichtsminimierung des Lastenfahrrads, ausgelegt sind, um die maximale Last (zuzüglich eines Sicherheitszuschlags), für die das Lastenfahrrad konzipiert ist (z. B. für eine Nennlast von 300 kg oder von 250 kg), zu tragen, ist es möglich, durch jede der oben dargestellten Maßnahmen, aber auch in Kombination mehrerer oder aller Maßnahmen, die Verwindungssteifigkeit zu steigern.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 ein erstes, in zahlreichen Belangen vereinfachtes, ergo schematisch in einer Ansicht von einer Blickrichtung von links aus dargestelltes Ausführungsbeispiel eines Lastenfahrrads zeigt,
Figur 2 das Lastenfahrrad gemäß Figur 1 in einer Ansicht von hinten zeigt,
Figur 3 das Lastenfahrrad nach Figur 1 von einer Position des Betrachters aus in einer isometrischen Ansicht zeigt, bei der der Betrachter links, erhöht, von hinten auf das Lastenfahrrad, das in Figur 1 gezeigt ist, blickt,
Figur 4 eine ähnliche isometrische Ansicht zu der Ansicht nach Figur 3 zeigt, bei der das Ausführungsbeispiel nach Figur 1 mit einer auf die Transportfläche eingeschobenen Transportbox ausgestattet ist,
Figur 5 das Ausführungsbeispiel nach Figur 1 in der Ansicht von links zeigt, nachdem weitere Karosserieteile an dem Versteifungsrahmen angebracht sind,
Figur 6 einen Ausschnitt einer Abbildung eines Lastenfahrrads gemäß einem weiteren Ausführungsbeispiel in einer Ansicht ähnlich zu der Ansicht nach Figur 3 zeigt,
Figur 7 das Ausführungsbeispiel nach Figur 6 in einer Draufsicht von oben, jedoch ohne Anbauteile wie Rahmenteile und ohne eine Transportbox zeigt,
Figur 8 ein weiteres Ausführungsbeispiel eines Lastenfahrrads zeigt, das eine ähnliche Darstellung des Lastenfahrrads ist wie sie in Figur 1 zu sehen ist, wobei weitere Vereinfachungen im Vergleich mit Figur 1 vorgenommen worden sind,
Figur 9 das Ausführungsbeispiel nach Figur 8 in einer Ansicht von vorne, jedoch ohne Vorderradgabel und ohne Transportbox zeigt,
Figur 10 das Ausführungsbeispiel nach Figur 8 in einer Ansicht von oben, jedoch ohne Transportbox zeigt,
Figur 11 einen Schnitt durch eine Motor-Radträger-Anordnung in schematischer Darstellung zeigt,
Figur 12 eine weitere Ausführungsform einer Motor-Radträger-Anordnung in schematischer Darstellung zeigt,
Figur 13 eine mögliche Weiterbildung der Radträger, z. B. nach den Figuren 6 und 7, dargestellt in der (Motor-)Radträger-Anordnung nach Figur 11, anhand einer vertikalen Schnittansicht zeigt,
Figur 14 die Weiterbildung des Radträgers nach Figur 13 in einer horizontalen Schnittansicht zeigt,
Figur 15 einen Schnitt durch einen Radträger zusammen mit Führungsschienen und einem Ausschnitt einer Bodenplatte zeigt und
Figur 16 eine alternative Ausgestaltung eines Radträgers zusammen mit Führungsschienen und einer Bodenplatte ähnlich der Darstellung nach Figur 15 zeigt.

### Figurenbeschreibung

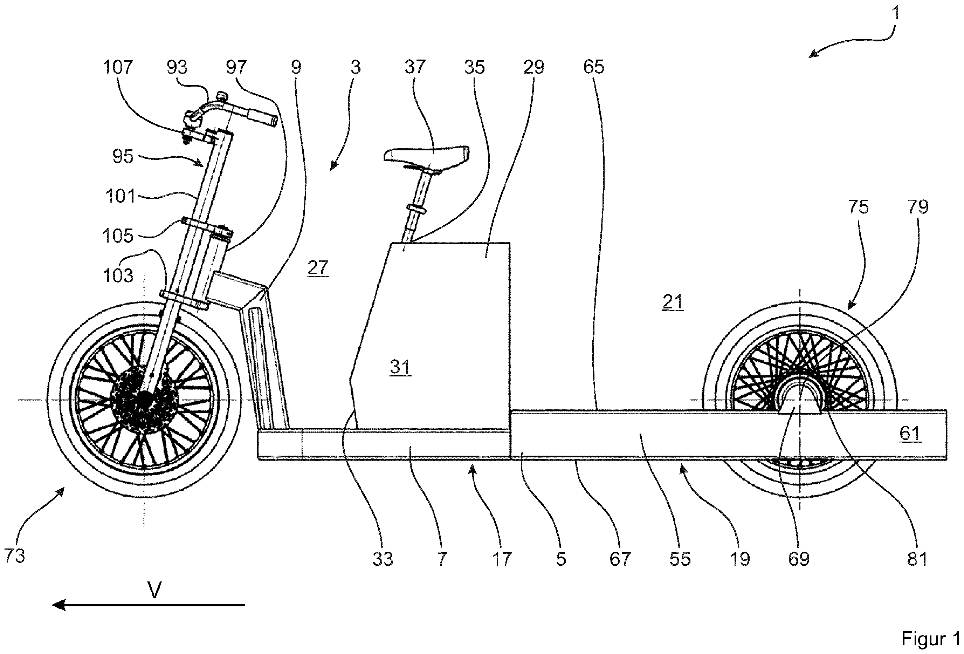

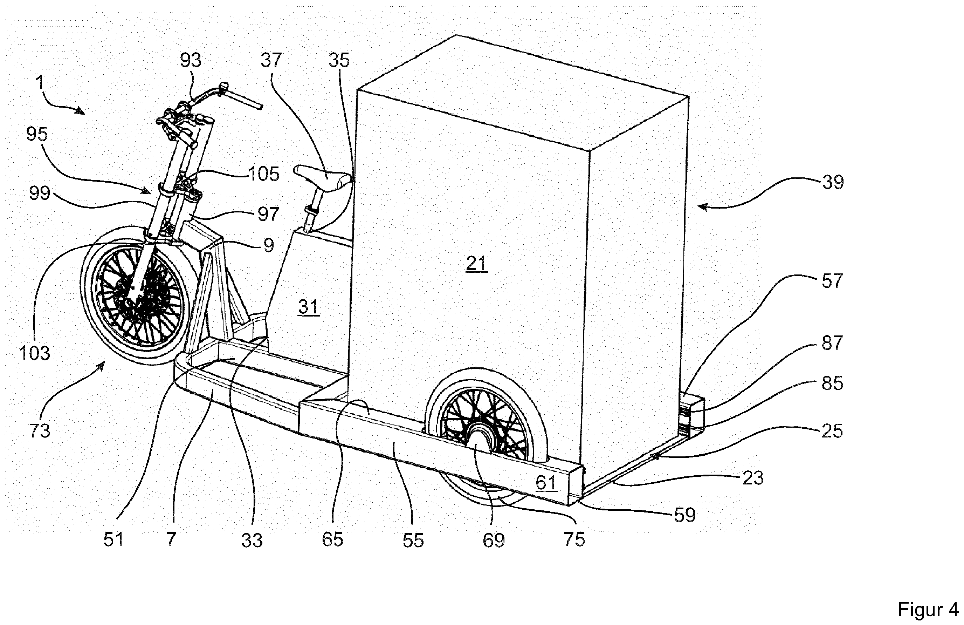

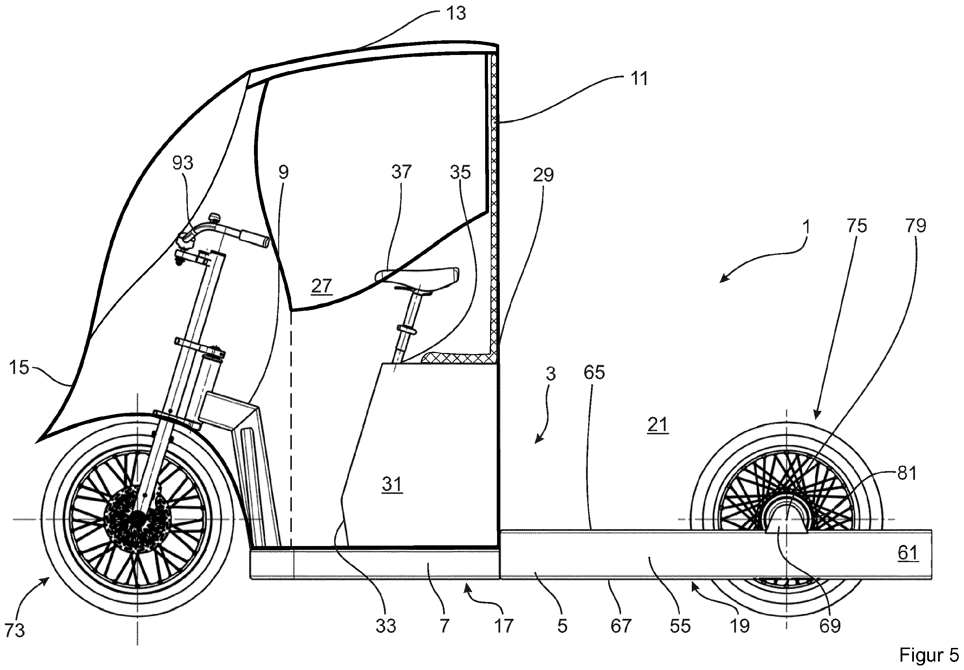

Die Figuren 1, 2, 3, 4, 5 zeigen ein erstes Ausführungsbeispiel eines Lastenfahrrads 1, wobei in den Figuren Figur 4 und Figur 5 jeweils zusätzliche Teile des Lastenfahrrads 1 zusätzlich zu seinem Rahmen 3 hinzugefügt worden sind bzw. weggelassen worden sind, z. B. eine Transportbox 39 (vgl. Figur 4), wodurch ein abgeschlossener Laderaum 21 angeboten wird. In Figur 5 wird (anders als in den Figuren 1 bis 4) eine von einem Gestänge 11 gestützte Karosserie mit den Karosserieteilen 13, 15 gezeigt, die zusätzlich auf den vorderen Bereich 17 des Rahmens 3 gesetzt werden kann, um einen (nicht dargestellten) Fahrer, der auf dem Fahrradsitz bzw. dem Sattel 37 Platz nimmt, vor unangenehmen Wettersituationen (solche Wetterlagen wie starke Sonneneinstrahlung, Regen, Schneefall oder starke Winde) zu schützen. Das in Figur 1 dargestellte Lastenfahrrad 1 ist ohne solche zusätzlich an dem Rahmen 3 anbaubaren Teile und Komponenten dargestellt, die als Zusatzbauteile eines Lastenfahrrads 1 zur Verfügung gestellt werden können. Je nach Wunsch des Nutzers bzw. des Fahrers eines Lastenfahrrads 1 können also weitere Komponenten und Bauteile an dem Rahmen 3, genauer an seinem vorderen Bereich 17 und/oder an seinem hinteren Bereich 19, angebracht werden.

Der Rahmen 3, der ein Gesamtrahmen des Lastenfahrrads 1 ist, umfasst einen bodenseitigen Versteifungsrahmen 5. Teil des Gesamtrahmens 3 ist der Versteifungsrahmen 5. Ein weiterer Teil des Rahmens 3 ist ein Stützrahmen 7. Der Gesamtrahmen 3 umfasst den Versteifungsrahmen 5 und den Stützrahmen 7. Aus dem Stützrahmen 7 ragt ein Unterrohr 9 in Richtung auf die Gabel 95 empor. Die Gabel 95 ist über das Steuerrohr 97 mit dem Unterrohr 9 drehbeweglich verbunden.

Das Lastenfahrrad, das in den Figuren 1, 2, 3, 4 und 5 zu sehen ist, hat einen Rahmen 3, dessen meisten Teile den bodenseitigen Versteifungsrahmen 5 bilden. Der bodenseitige Rahmen 5 als Teilrahmen des Gesamtrahmens 3 ist plattformbildend. Der bodenseitige Versteifungsrahmen 5 begrenzt seitlich den Laderaum 21. An dem Versteifungsrahmen 5 sind die beiden Hinterräder, wie das Hinterrad 75, angebracht.

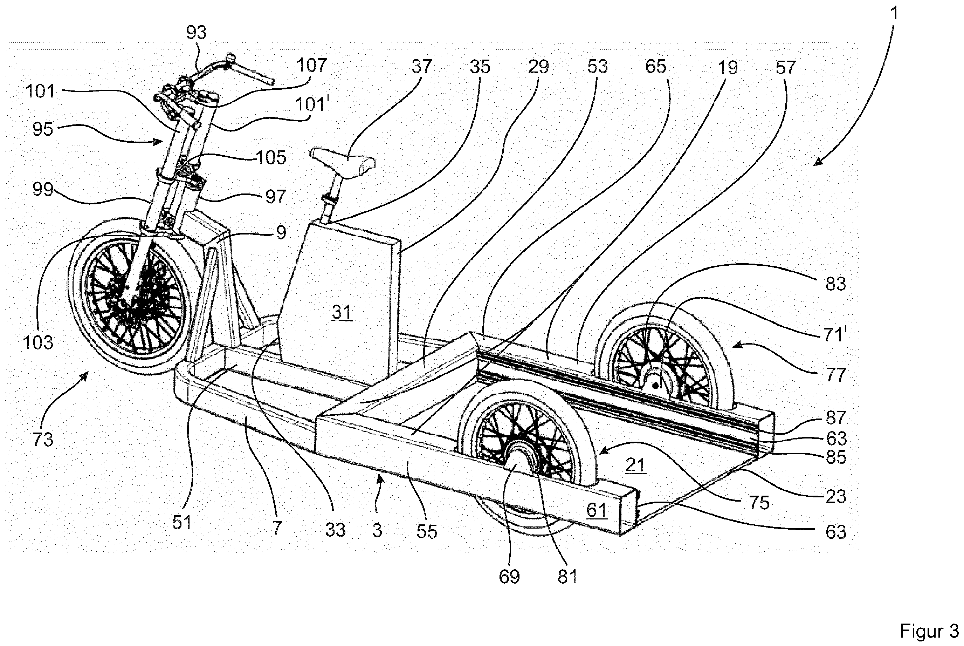

Im vorderen Bereich 17 des Rahmens 5 gibt es seitlich den Stützrahmen 7, an dem das Unterrohr 9, das ein gekröpftes Unterrohr 9 ist, befestigt bzw. angebracht ist, wobei das Unterrohr 9 sowohl auf dem Stützrahmen 7 als auch auf einem Zentralträger 51 (siehe insbesondere Figur 3) ruht. Das Unterrohr 9 führt zu dem Steuerrohr 97 (siehe Figuren 1 und 3), woran die Gabel 95 angebunden ist.

Als querverlaufender Träger ist der Querträger 53 ein ungefähr einer Mitte des Lastenfahrrads 1 angesiedeltes Bauteil, an dessen einer Seite die Radträger 55, 57 angebracht sind und an einer oder mehreren anderen Seite(n) der Zentralträger 51 angebracht ist. Kräfte, die über die Träger Zentralträger 51 und Radträger 55, 57 in den Querträger 53 eingebracht werden, können sich (zumindest teilweise) kompensieren (im Sinne einer Torsionskompensation an dem hohlen, rechteckigen Querträger 53).

Im vorderen Bereich 17 des bodenseitigen Versteifungsrahmens 5 gibt es die Sattelstütze 29, die, wie aus Figur 3 besonders deutlich zu entnehmen ist, auf dem Zentralträger 51 ruht. Der Zentralträger 51 trägt zum einen die Sattelstütze 29 und zum anderen (wenigstens teilweise) das Unterrohr 9. Eine Durchbiegung des Zentralträgers 51 wird durch den Stützrahmen 7 an einer Seite des Zentralträgers 51 und den Querträger 53 an einer anderen Seite des Zentralträgers 51 erschwert.

Der Fahrradsitz in Gestalt eines Sattels 37 reicht mit seiner Sattelstange in die Fahrradsattelaufnahme 35, die durch die Sattelstütze 29 zur Verfügung gestellt wird. In dem Bereich, der für einen Fahrer des Lastenfahrrads 1 vorgesehen ist, sind somit das Unterrohr 9, die Sattelstütze 29 als Fortführung einer Generatoraufnahme 31 und der Sattel 37 vorhanden, sodass, wie besonders gut in Figur 1 zu sehen ist, als Fahrerraum 27 der freie Raum zwischen Unterrohr 9 und Sattelstütze 29 zur Verfügung steht. Die Generatoraufnahme 31 ist zugleich ein Rahmen 33 für die Halterung einer (nicht dargestellten) Antriebskurbel. Im vorderen Bereich 17 des Gesamtrahmens 3 befindet sich somit das Unterrohr 9, der Stützrahmen 7, der Rahmen 33 für eine Antriebskurbel, die Generatoraufnahme 31, die Sattelstütze 29 und der Sattel 37, der in der Fahrradsattelaufnahme 35 ruht. Die Generatoraufnahme 31 ist größer als der in ihr platzierte Generator, um (zusätzlich) einen Akkumulator zu verwahren, der als Zwischenspeicher von dem Generator aufladbar ist. Die Energie des hinter der Wand der Generatoraufnahme 31 (nicht sichtbar eingebauten) Akkumulators steht für die Motoren, wie dem ersten Motor 81, zur Verfügung.

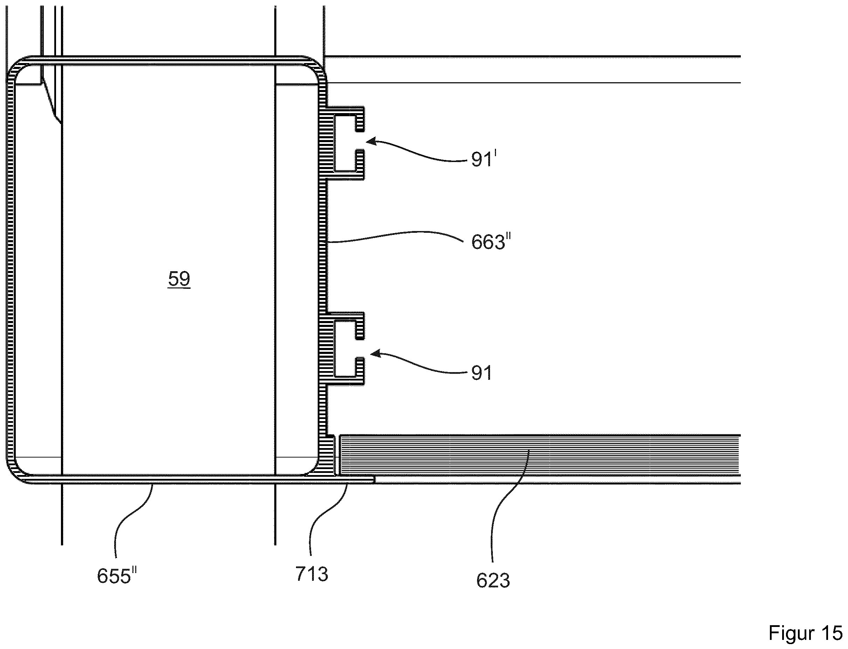

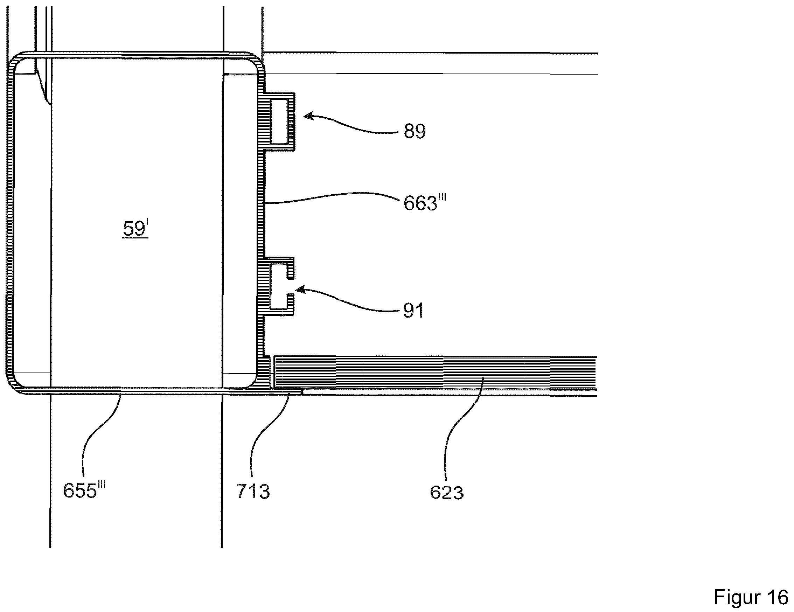

Ein hinterer Bereich 19 des Gesamtrahmens 3 ist für die Zurverfügungstellung eines Laderaums 21 gestaltet. Der Laderaum 21 wird seitlich durch die Radträger, wie der Radträger 55, begrenzt. Der Radträger 55 ist ein Hohlprofil mit einer Unterseite 67, einer Oberseite 65 und Seitenwänden, wie der ersten Seitenwand 61 und der zweiten Seitenwand 63. Aus der Seitenwand 61 steht eine Lasche bzw. Zunge 69 empor, an der ein Radzentrum 79 des Hinterrads 75 angebracht werden kann. Die Zunge 69, die auch als Lasche bezeichnet werden kann, ist die flankierende Halterung bzw. Halteplatte für die eine Seite einer Nabe des Hinterrads 75. Die Zunge 69 ist nicht nur eine Halterung für ein Hinterrad 75, sondern auch eine Halterung für einen Motor 81. Der Motor 81 ist ein Radnabenmotor im Zentrum des Hinterrads 75. Der Radträger 55 bildet ein erstes Ende des Lastenfahrrads 1. Der Motor 81 reicht von einer Seite 61 des Radträgers 55 zur anderen Seite 63 (vgl. Figuren 1, 2 und 3). Der Motor 81 sorgt für eine Verbesserung der Verwindungssteifigkeit der als stranggepresste Profile hergestellten Profile 59, 59^{I} (vgl. Figuren 15 und 16). Die Profile 59, 59^{I} haben Seitenwände, die -wie in den Figuren 15 und 16 zu sehen ist - höher sind als die Breite der Profile 59, 59^{I} ist.

Am anderen Ende, dem vorderen Ende des Lastenfahrrads 1 befindet sich das Vorderrad 73, das an der Gabel 95 befestigt ist. Am anderen Ende der Gabel 95 ist ein Lenker 93 angebracht, der ein Bogenlenker ist (auch backsweep-Lenker genannt).

Die Gabel 95 ist eine Doppelgabel, deren Gabelscheiden 101, 101^{I} durch die Gabelbrücken 103, 105, 107 verbunden sind.

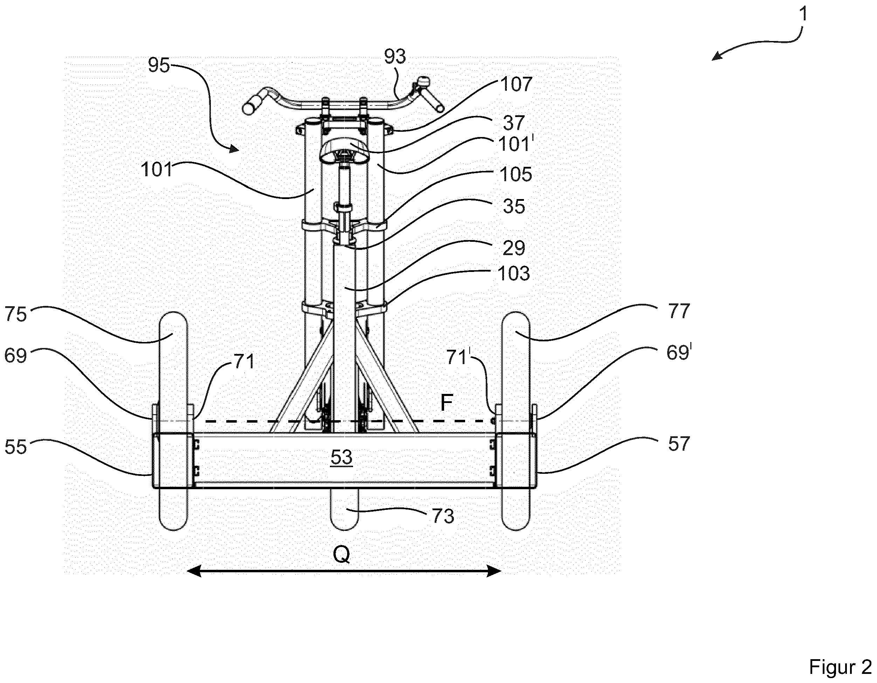

Das Lastenfahrrad 1 ist als dreirädriges Fahrzeug ausgestaltet, bei dem ein einzelnes Vorderrad 73 vorne, d. h. in Fahrtrichtung V (im vorderen Bereich) angeordnet ist und zwei, wie aus Figur 2 besonders gut zu entnehmen ist, in Flucht F befindliche Hinterräder 75, 77 im hinteren Bereich des Gesamtrahmens 3 platziert sind. Das Vorderrad 73 und die Hinterräder 75, 77 bilden die drei Bodenstützpunkte des nur wenige Zentimeter vom Boden entfernten Lastenfahrrads 1 (in der vorgestellten Ausführungsform 10 cm Bodenfreiheit; in Anlehnung an Vorschriften für Kraftfahrzeuge sind aber auch 11 cm Bodenfreiheit realisierbar).

In Figur 2 ist das Lastenfahrrad 1 von hinten dargestellt, sodass das Lastenfahrrad 1 seine Querrichtung Q bzw. seine Quererstreckung, die vom ersten Hinterrad 75 bis zum zweiten Hinterrad 77 geht, zeigt.

Der Querträger 53 ist die Verbindung zwischen dem ersten Radträger 55 und dem zweiten Radträger 57. Der erste Radträger 55, daran angeschlossen der Querträger 53 und daran wiederum angeschlossen der zweite Radträger 57 bilden drei Seiten eines Vierecks, die so Ränder des Ladebereichs 21 bilden (vgl. Figur 3).

Jeder Radträger 55, 57 hat eine Ausnehmung, in die ein Hinterrad 75, 77 eingesetzt ist. Ein Hinterrad 75 wird beidseitig von einem Radträger 55, 57 getragen.

Um einen Schwerpunkt des Lastenfahrrads 1 tiefer zum Boden hin zu fokussieren, hat jeder Radträger 55, 57 zwei Zungen bzw. Laschen 69, 71 bzw. 69^{I}, 71^{I}, durch die die Radzentren 79 vom Boden weggewandt angeordnet werden können. In der Ausgestaltung nach den Figuren 1, 2, 3, 4 und 5 sind die Radzentren 79 oberhalb der Oberseite 65 des Radträgers 55, 57 positioniert.

Genau in der Mitte zwischen den beiden Hinterrädern 75, 77 bzw. genau in der Mitte zwischen den beiden Radträgern 55, 57, d. h. genau in der Mitte des Querträgers 53 ist nach vorne versetzt das Vorderrad 73 angeordnet. Fluchtend zu dem Vorderrad 73 ist die Sattelstütze 29.

Der Sattel 37 mit seiner Fahrradsattelaufnahme 35 und der Sattelstütze 29 befinden sich in der Flucht zum Vorderrad 73.

Der Lenker 93 befindet sich noch vor dem Sattel 37, sozusagen fluchtend zu dem Vorderrad 73.

Werden die Figuren 1 und 2 gemeinsam betrachtet, so ist zu erkennen, dass die Ladefläche 21 bei dem Lastenfahrrad 1 sich durch die Breite zwischen den Radträgern 55, 57, d. h. in Querrichtung Q, und durch die Länge des hinteren Bereichs 19 ergibt.

Figur 3 zeigt das Lastenfahrrad 1 in einer dreidimensionalen Darstellung.

Zu dem Lastenfahrrad 1 gehören der Gesamtrahmen 3, das Unterrohr 9, die Gabel 95, der Lenker 93, das Vorderrad 73, die beiden Hinterräder 75, 77, die Bodenplatte 23, die Generatoraufnahme 31 und der Sattel 37 (siehe insbesondere Figur 1 und Figur 3).

Zu dem Gesamtrahmen 3 gehört der Versteifungsrahmen 5 und der Stützrahmen 7. Der Versteifungsrahmen 5 hat die Teile Zentralträger 51, Querträger 53, erster Radträger 55 und zweiter Radträger 57.

Das in Figur 3 gezeigte Lastenfahrrad 1 bietet aufgrund seines hinteren Bereichs 19 mit dem Querträger 53 und mit den zum Querträger 53 im 90 Grad-Winkel verlaufenden beiden Radträgern 55, 57 den für Lastenaufnahmen bestimmten Ladebereich 21. Zwischen den drei Trägern Querträger 53, erster Radträger 55 und zweiter Radträger 57 erstreckt sich im Bereich der Unterseiten eine Bodenplatte 23, sodass der Laderaum 21 durch die Bodenplatte 23, die Radträger 55, 57 und den Querträger 53 am unteren Ende eingefasst ist. Die Radträger 55, 57 sind zugleich die Einfassungen für die Hinterräder 75, 77. An den Radträgern 55, 57 sind Führungsschienen 85, 87 angebracht, die, je nach Bedarf, unterschiedlich genutzt werden können. Die Führungsschienen 85, 87 können sowohl als Kabelkanal 89 (siehe Figur 16) als auch beide als Verankerungskanäle 91, 91^{I} (siehe Figur 15) verwendet werden. Eine Seitenwand 61 mit seiner Zunge 69 stellt die äußere Begrenzung des Lastenfahrrads 1 dar und erstreckt sich über das Hinterrad 75. Das Hinterrad 75 ist über die Zunge 69 an dem ersten Radträger 55, genauer an der ersten Seitenwand 61 des ersten Radträgers 55 befestigt. Auf der Innenseite (zweite Seitenwand 63) gibt es eine zweite Zunge 71^{I}, so wie im Zusammenhang mit dem Hinterrad 77 zu sehen. Die Zungen 69, 71^{I} tragen nicht nur die Hinterräder 75, 77, sondern auch die Motoren 81, 83.

Aus der Oberseite 65 des Radträgers 57 ragt das Hinterrad 77 empor.

Im Bereich des Stützrahmens 7 befinden sich die Teile des Lastenfahrrads 1 für den Fahrer, der auf dem Sattel 37 sitzt.

Die Gabel 95 des Lastenfahrrads 1 ist eine typische Starrgabel, an deren oberem Ende ein bogenförmiger Lenker 93 befestigt ist. An Stelle der Starrgabel kann ein Lastenfahrrad aber auch mit einer Telegabel oder mit einer "Upside-Down"-Gabel realisiert sein. In ähnlichen Ausführungen hat also ein Lastenfahrrad wie das Lastenfahrrad 1 entweder eine Telegabel oder eine "Upside-Down"-Gabel. Die beiden Gabelscheiden 101, 101^{I} der Gabel 95 verlaufen über ihre gesamte Höhe parallel zueinander, sie sind durch die Gabelbrücken 103, 105, 107 beabstandet. Das Unterrohr 9 hat an seinem einen Ende ein Steuerrohr 97, über das eine Verbindung zu der Gabel 95 mit der unteren Gabelbrücke 103 und der mittleren Gabelbrücke 105 geschaffen ist. Eine Gabelscheide 101, 101^{I} ist ein federndes Gabelrohr 99. Die Gabelrohre, wie das Gabelrohr 99, haben am unteren Ende je ein Maul zur Schraubbefestigung einer Welle des Vorderrads 73. Die Gabel 95 steht in einem ca. 15° Winkel außerhalb einer Senkrechten zum Boden (bzw. zur Fahrbahn).

Der Zentralträger 51, der mittig in dem Stützrahmen 7 liegt, ist so dimensioniert, dass eine Person mit einem Gewicht von mehr als 120 kg auf dem Sattel 37 sitzen kann, ohne dass das Gesamtgewicht aus (nicht eingezeichneter) Person, Generatoraufnahme 31 mit Rahmen 33 für die Antrittskurbel und die Sattelstütze 29 zu einer maximalen Durchbiegung von bis zu 3 mm führt. Die Durchbiegung des Zentralträgers 51 geschieht in Richtung auf den Boden (bzw. Fahrbahn). Der Sattel 37 ist mit seinem Sattelrohr in die Fahrradsattelaufnahme 35 eingeführt.

Die in Richtung auf den hinteren Abschluss letzte Baugruppe, die den hinteren Bereich 19 des Gesamtrahmens 3 bildet, sind die drei untereinander verbundenen Träger 53, 55, 57, aus deren Oberseiten 65 die beiden Hinterräder 75, 77 hervortreten.

Die Motoren 81, 83 werden durch die Laschen bzw. die Zungen, wie die Zungen 69, 71^{I}, gehalten. Die Motoren 81, 83 stabilisieren die Zungen 69, 71^{I} gegen Durchbiegungen und somit auch die Seitenwände 61 der Radträger 55, 57. Eine weitere Maßnahme der Stabilisierung des hinteren Bereichs 19 ist die Bodenplatte 23, die den Ladebereich 21 nach unten abschließt. Auf der Bodenplatte 23 kann eine zu transportierende Last aufgesetzt werden. Soll die (nicht dargestellte) Last gesichert werden, während sie sich im Ladebereich 21 befindet, kann die Last an den Führungsschienen 85, 87 gesichert werden. Die Führungsschienen 85, 87 sind weitere zur Stabilisierung der Radträger 55, 57 vorgesehene oberflächlich angeordnete Profile.

Wie das Lastenfahrrad 1 nach Figur 3 mit einer Last "Transportbox" im Ladebereich 21, die hinter dem Sattel 37 steht, aussieht, kann Figur 4 entnommen werden. Die Transportbox 39 im Ladebereich 21 kann höher sein als ein Mensch, der auf dem Sattel 37 als Fahrer des Lastenfahrrads 1 sitzt.

Die Radträger 55, 57 werden durch die niedrigeren Profile des Stützrahmens 7 bis zu dem Unterrohr 9 nach vorne in Richtung auf das Vorderrad 73 verlängert. Ist die Bodenplatte 23, die die Lastfläche 25 bietet, nicht nur zwischen den Radträgern 55, 57 angeordnet, sondern auch zwischen den Rahmenteilen des Stützrahmens 7 unterhalb des Zentralträgers 51, so kann eine so große Bodenplatte 23 nicht nur die Lastfläche 25 aufweisen, sondern auch noch eine Stellfläche für Füße des Fahrradfahrers.

Aufgrund der blockartigen, massiven Ausführung der Generatoraufnahme 31 zwischen dem Rahmen 33 wird die Gewichtsbeanspruchung über den Sattel 37 in die Fahrradsattelaufnahme 35 abgefangen.

Die Seitenwand 61 ist über die Zunge 69 zu einer Aufnahme des Rads 75 hochgezogen. Die Seitenwand 61 schließt sich der Oberseite 65 des Radträgers 55 an. Während die Seitenwand 61 von Anfang bis Ende des Radträgers 55 durchgehend ausgebildet ist, bietet die Oberseite 65 des Radträgers 55 ein Austrittsloch für das Hinterrad 75.

Die Transportbox 39 (siehe Figur 4) als Behältnis im Ladebereich 21 wird durch die Führungsschienen 85, 87 an den Radträgern, von denen der Radträger 57 in Figur 4 zu sehen ist, befestigt und sorgt für eine Positionsfixierung auf der Lastfläche 25.

Zu der Gabel 95 zählen das Anbauteil Lenker 93, das Gabelrohr 99 und die Gabelbrücken 103, 105. Das Steuerrohr 97, das als Bestandteil des Rahmens angesehen wird, ist ein Übergangsstück zwischen Gabel 95 und Rahmen 3, genauer zwischen Unterrohr 9 und Gabel 95.

In Figur 5 wird das Lastenfahrrad 1, das aus den Figuren 1 bis 4 bekannt ist, mit KarosserieTeilen 13, 15, die am Gestänge 11 befestigt sind, dargestellt. Die Karosserie-Teile 13, 15 sind durchsichtig dargestellt, sodass z. B. der Lenker 93 zu sehen ist. Das Gestänge 11 und die Karosserie-Teile 13, 15 lagern im vorderen Bereich 17 des Rahmens 3. Die Karosserie-Teile 13, 15 schaffen eine senkrechte Wand zum hinteren Bereich 19 des Rahmens 3. Die Karosserie-Teile 13, 15 bilden eine Fahrerkabine, wodurch einem auf dem Sattel 37 sitzenden Fahrer, also einem im Fahrerraum 27 sich befindenden Fahrer, der über den Lenker 93 das Vorderrad 73 lenken kann, Schutz vor unangenehmen Wettereinwirkungen (z. B. Platzregen) geboten wird.

Das Unterrohr 9 befindet sich in der Mitte der Quererstreckung Q (vgl. Figur 2), sodass ein Fahrer, der seine Füße von einer (nicht dargestellten Tretkurbel) abstellen will, diese auf den Stützrahmen 7 abstellen kann. In einer alternativen Ausführungsform kann zu dem Stützrahmen 7 auch noch eine dazwischen angeordnete Bodenplatte vorhanden sein, auf die ein Fahrer seine Füße abstellen kann. Die Tretkurbel ist außen an der Generatoraufnahme 31, d. h. am Rahmen 33 für eine Antrittskurbel, angebracht. Der Rahmen 33 ist zugleich die Halterung für die Fahrradsattelaufnahme 35, somit eine Sattelstütze 29.

Der hintere Bereich 19 des bodenseitigen Versteifungsrahmens 5 wird wesentlich durch die Radträger wie der Radträger 55 mit seinen Seiten Unterseite 67, Oberseite 65 und Seitenwände 61 (und 63) bestimmt. Der Radträger 55 bietet Platz für die Aufnahme des Hinterrads 75. Hierfür ist aus dem Radträger 55 einstückig die Zunge 69 bodenabgewandt, d. h. nach oben herausgebogen. Die Zunge 69 ist die Befestigungslasche für das Radzentrum 79 mit dem Motor 81. Der Radträger 55 ist nicht nur so stabil ausgelegt, dass er sein Hinterrad 75 tragen kann, sondern selbst eine Last im Laderaum 21 sorgt für eine maximale Durchbiegung der Radträger 55 unterhalb eines Maximums wie 3 mm.

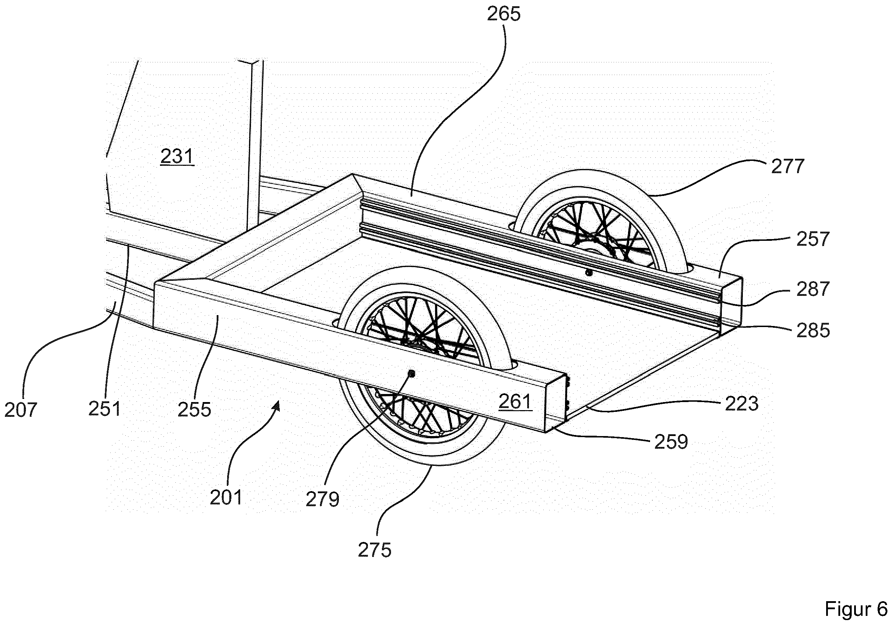

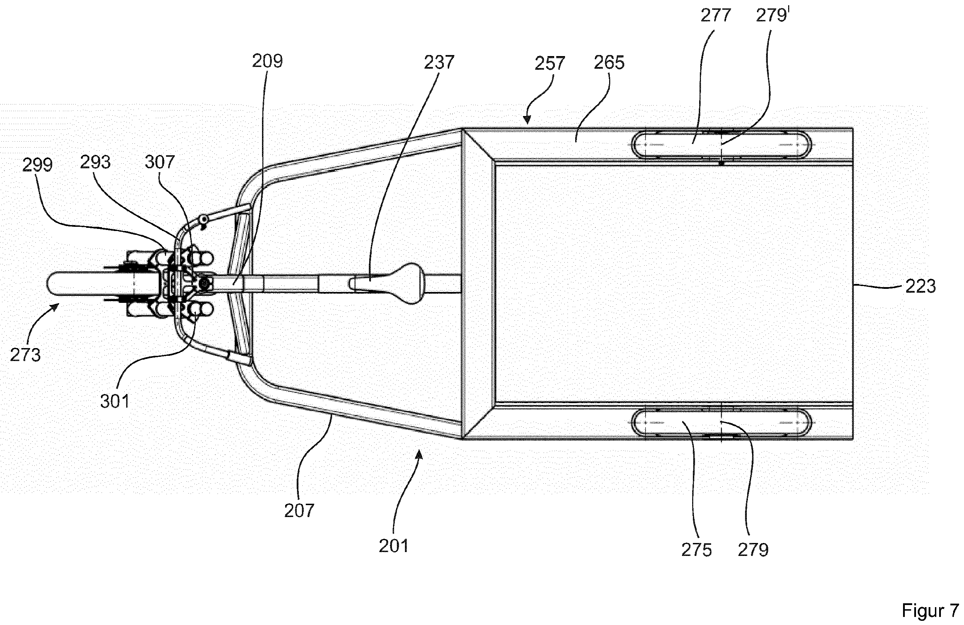

Die Figuren 6 und 7 zeigen ein weiteres Lastenfahrrad 201 anhand von zwei ausgewählten Ansichten (Ausschnitt aus einer 3-D-Ansicht in Figur 6 und Ansicht von oben in Figur 7). Durch die Figuren 6 und 7 wird ein weiteres Ausführungsbeispiel eines Lastenfahrrads 201 verdeutlicht, das in Bezug auf viele Aspekte zu dem Lastenfahrrad 1 identisch realisiert ist. Die Vorstellung des Lastenfahrrads 1 kann somit auf die Beschreibung des Lastenfahrrads 201 nach den Figuren 6 und 7 unmittelbar übertragen werden (entsprechend sind die Bezugszeichen um die Zahl 200 erhöht nummeriert).

Das in Figur 6 gezeigte Lastenfahrrad 201 hat aber in seinen beiden Radträgern 255, 257 eine etwas anders gestaltete Radaufhängung der Hinterräder 275, 277. In der Seitenwand 261 des Radträgers 255 sind Befestigungen für die Radzentren, wie das Radzentrum 279 des ersten Hinterrads 275 (oder auch des zweiten Radzentrums 279^{I} des zweiten Hinterrads 277 - vgl. Figur 7), eingebracht.

Die Radträger 255, 257 werden durch eine Bodenplatte 223 auf Abstand gehalten und gegen eine Durchbiegung gesichert.

Der Stützrahmen 207 und der Zentralträger 251, auf dem die Generatoraufnahme 231 ruht, haben eine geringere Bauteilhöhe als die Radträger 255, 257, die sich durch die Höhe zwischen Bodenplatte 223 und die Oberseite des Radträgers 265 ergibt.

Die Oberseite 265 des Radträgers 257 ist mit einer Ausnehmung versehen, sodass das Hinterrad 277 nicht nur nach unten aus dem Radträger 257 herausschaut, sondern auch nach oben. Im Inneren ist jeder Radträger 255, 257 hohl, es handelt sich um Hohlprofile 259.

Die Seitenteile der Radträger 255, 257 werden durch die beiden Führungsschienen 285, 287 stabilisiert, die auf der Seite zur Bodenplatte 223 hin verlaufen.

Wie aus Figur 7 zu entnehmen ist, verlaufen die Radzentren 279, 279^{I} der Hinterräder 275, 277 fluchtend oberhalb der Bodenplatte 223 und unterhalb der Oberseite 265 eines Radträgers, wie des Radträgers 257.

Die Radträger, wie der Radträger 257, sind nach vorne des Lastenfahrrads 201, d. h. auf den Lenker 293, auf das Vorderrad 273 und auf die Gabelscheide 301 hin, durch den Stützrahmen 207 verlängert. Als Verlängerungspunkt des Stützrahmens 207 ist das Unterrohr 209 der Endpunkt des Stützrahmens 207. An dem Unterrohr 209 sind die Gabelbrücken wie die Gabelbrücke 307 befestigt. Die Gabelbrücken, wie die Gabelbrücke 307, sind die Verbindungselemente zwischen den Gabelrohren 299.

Zur besseren Orientierung ist in Figur 7 auch der Sattel 237 eingezeichnet, der sich vor der Bodenplatte 223 und hinter dem Unterrohr 209 oberhalb des Stützrahmens 207 befindet.

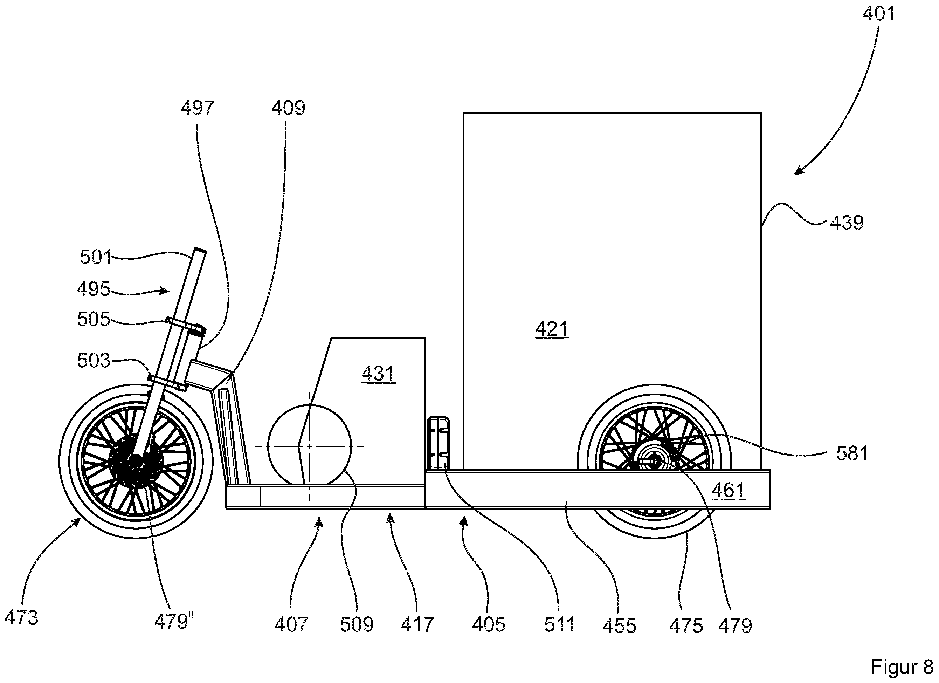

Die Figuren 8, 9 und 10 zeigen ein weiteres Ausführungsbeispiel eines Lastenfahrrads 401, das in Bezug auf viele technische Realisierungen mit den beiden anderen Ausführungsformen des zuerst erörterten Lastenfahrrads 1 (nach den Figuren 1 bis 5) und des als Zweites erörterten Lastenfahrrads 201 (nach den Figuren 6 und 7) vergleichbar ist. Aus Gründen der besseren Darstellbarkeit sind mehrere Anbauteile wie ein Sattel, z. B. ist ein Sattel 237 in Figur 7 gezeigt, z. B. ist ein Sattel 37 in Figur 1 gezeigt, oder ein Lenker, z. B. ist ein Lenker 293 in Figur 7 gezeigt, weggelassen worden. Auch fehlt eine obere Gabelbrücke (vgl. obere Gabelbrücke 107 in Figur 3).

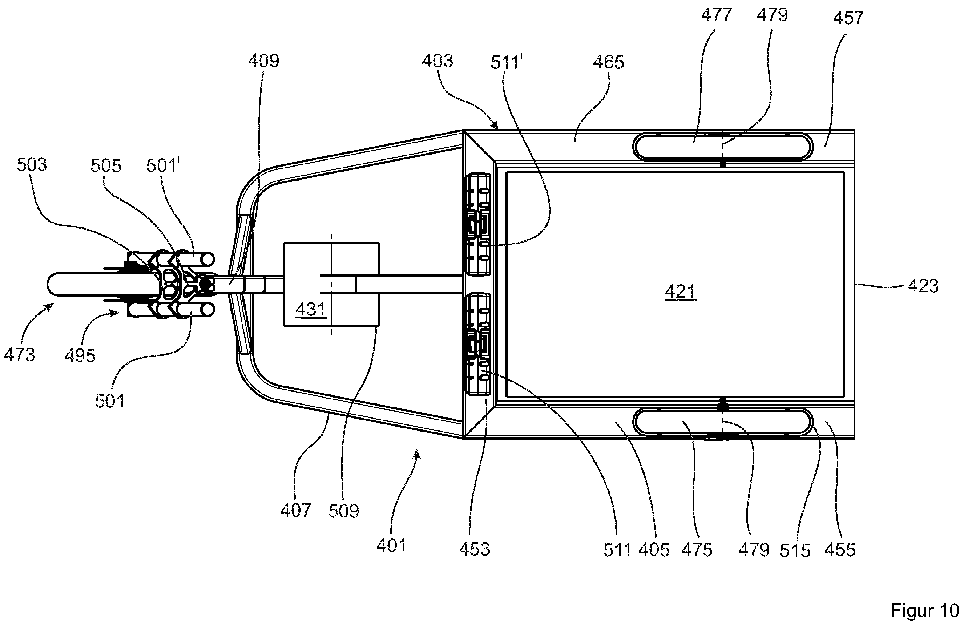

Das Lastenfahrrad 401 gem. den Figuren 8 bis 10 hat - im Vergleich mit dem Lastenfahrrad 1 nach den Figuren 1 bis 5 - u. a. anderswo platzierte Akkumulatoren 511, 511^{I}. In einem Lastenfahrrad 1 nach den Figuren 1 bis 5 ist der Akkumulator zusammen mit der Generatoraufnahme verbaut. Über die Generatoraufnahme 31 wird aber auch eine Antriebsleistung mittels Tretkurbel eingebracht, sodass die Akkumulatoren an jener Stelle aufgrund ihres Eigengewichts zu einer zusätzlichen Torsionsbelastung des Querträgers beitragen. Soll die Torsionsbelastung aufgrund einer Betätigung der Kurbel reduziert werden (vgl. den eingezeichneten Tretkurbelradius 509 in Figur 8), können die Akkumulatoren 511, 511^{I} (siehe Figur 10) hinter der Generatoraufnahme 431 auf dem Querträger 453 angeordnet werden (vgl. Figuren 8, 9 und 10 miteinander).

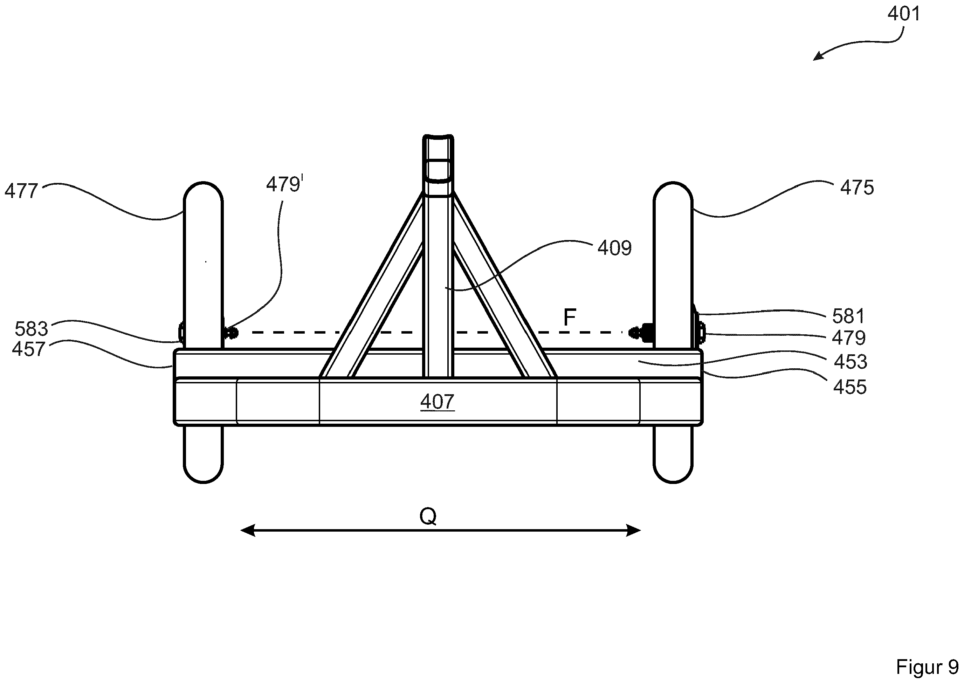

Das Zentrum des Tretkurbelradius 509 liegt ungefähr auf der gleichen Höhe wie die Radzentren 479, 479^{I}, 479" der Räder Vorderrad 473 und Hinterrad 475, 477 (vgl. Figur 8 (Radzentren 479 und 479") mit Figur 9 (Radzentren 479 und 479^{I}) und mit Figur 10 (Radzentren 479 und 479^{I})).

Um die fluchtende Anordnung zwischen den (Radnaben-)Antriebswellen 581, 583, an denen einer der oder mehrere (nicht dargestellte) Motoren angeschlossen sind, besser sehen zu können, sind in Figur 9 die Akkumulatoren 511, 511^{I} nicht eingezeichnet, damit der Blick auf die Höhenlinie der Flucht F nur noch durch das dreibeinartige Unterrohr 409 verdeckt ist.

Aus der Figur 8 ist zu entnehmen, dass die Transportbox 439, die in den Laderaum 421 des Lastenfahrrads 401 einzuschieben ist, nur so weit eingeschoben werden kann, dass zwischen der Generatoraufnahme 431 und einer Vorderwand der Transportbox 439 ein Freiraum für die Akkumulatoren wie dem Akkumulator 511 bleibt. Der bodenseitige Versteifungsrahmen 405 trägt auch die Akkumulatoren (siehe Akkumulator 511), genauer dort, wo die Radträger 455, 457 aufhören, befindet sich der Akkumulator 511. Der Radträger 455 hat eine senkrecht durchgehende Ausnehmung 515 (siehe Figur 10), durch die ein Teil des Hinterrads 475 durchgesteckt werden kann. Das Hinterrad 475 wird durch die eine Seitenwand 461 des Radträgers 455 gegen Berührung von außen abgedeckt. Die Radnabenantriebswelle 581 liegt höher als der Radträger 455. Das Radzentrum 479 des Hinterrads 475 befindet sich oberhalb des Radträgers 455. Bei dieser Konstellation liegt die Radnabenantriebswelle 581 so hoch, dass ein Antriebsmotor an Stelle der Radnabenmotoren (vgl. Radnabenmotor 81 nach Figur 5) auch in einem Bereich der Ladefläche angeordnet werden kann, der sich von einem Hinterrad 475 bis zu dem anderen Hinterrad 477 erstrecken kann (vgl. die in Figur 9 gezeigte Querrichtung Q).

Vor dem Akkumulator 511 gibt es den vorderen Bereich 417 des Versteifungsrahmens 405, der Teil des Gesamtrahmens 403 ist, wozu auch der Stützrahmen 407 gehört. Zwischen dem Stützrahmen 407 liegt die Generatoraufnahme 431, an der die Tretkurbel, die sich im Tretkurbelradius 509 drehend bewegen kann, angebracht ist.

Nach vorne hin hat das Fahrrad 401, das in den Figuren 8 bis 10 dargestellt ist, ähnlich zu den anderen Ausführungsbeispielen nach Figur 1 und nach Figur 7, eine Gabel 495 mit ihren Gabelscheiden 501 und mit den Gabelbrücken 503, 505. Die Gabel 495 ist an dem Steuerrohr 497 befestigt. An der Gabel 495 ist das Vorderrad 473 mit seinem Radzentrum 479^{II} befestigt.

Wie anhand von Figur 9 zu sehen ist, sind die Radnabenantriebswellen 581, 583 der beiden Hinterräder 475, 477 fluchtend in der Flucht F oberhalb des Querträgers 453 und somit auch oberhalb der Radträger 455, 457 angesiedelt. Die Radnabenantriebswellen 581, 583 befinden sich in den Radzentren 479, 479^{I} der Hinterräder 475, 477.

Figur 9 zeigt auch, dass der Stützrahmen 407 nur ungefähr halb so hoch ist wie die Höhe des Querträgers 453 und der Radträger 455, 457.

Die zuvor gemachten Ausführungen lassen sich auch in der Perspektive von oben gem. Figur 10 nachvollziehen.

Figur 10 zeigt die Bodenplatte 423 des Lastenfahrrads 401 zwischen den beiden Hinterrädern 475, 477 mit ihren Radzentren 479, 479^{I} und dem Querträger 453, um den Laderaum 421 zur Verfügung zu stellen. Der Querträger 453 trägt die Akkumulatoren 511, 511^{I}. Die Oberseite 465 der Radträger 455, 457 ist höher als die Oberseite der Bodenplatte 423.

Der Stützrahmen 407 umrundet die Generatoraufnahme 431, die doppelt so groß ist, wie der Tretkurbelradius 509. Der Stützrahmen 407 ist im vorderen Bereich des Fahrrads 401 der Träger für das Unterrohr 409, an dem wiederum die Gabel 495 mit ihren Gabelscheiden 501, 501^{I} und mit den Gabelbrücken 503, 505 befestigt ist, um das Vorderrad 473 zu führen.

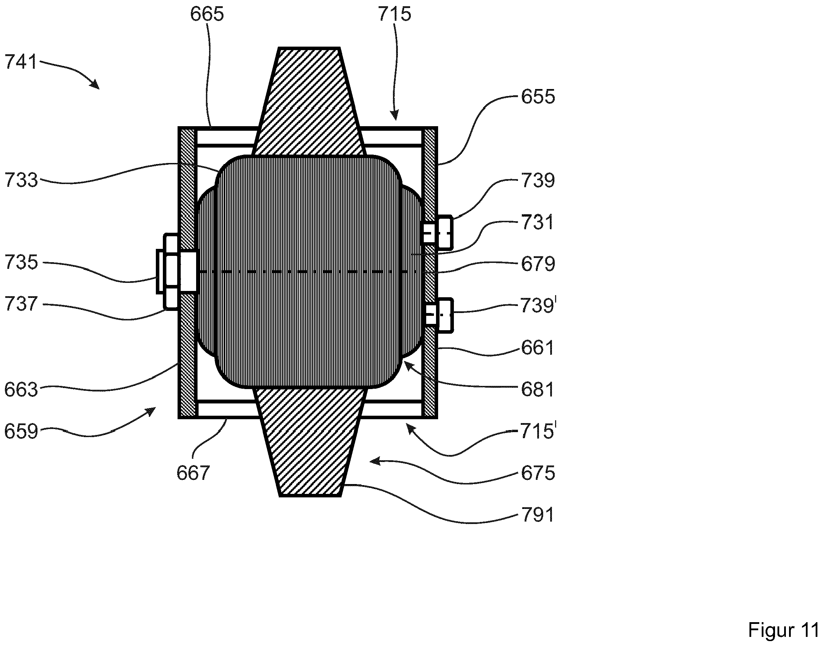

Figur 11 zeigt eine Anordnung 741, die einen Radträger 655 und einen Radnabenmotor 681 in beidseitiger Anlagerung an den Seitenwänden 661, 663 zeigt.

Der Radträger 655 ist ein einstückiges Leichtmetall-Profil 659 (Aluminium-Profil), in dessen Oberseite 665 eine Ausnehmung 715 eingearbeitet ist (Möglichkeiten der Herstellung: eingefräst, alternativ eingestanzt). Das Leichtmetall-Profil 659, das den Radträger 655 darstellt, hat eine Ausnehmung 715^{I} in der Unterseite 667.

Der Radnabenmotor 681 ist ein Motor, bei dem der Stator 731 innenliegend ist, der vom Rotor 733 umrundet wird. Der Block des Stators 731 sorgt für eine Versteifung zwischen den Seitenwänden 661, 663.

Die in Figur 11 gezeigte Motor-Radträger-Anordnung 741 umfasst den Radträger 655 sowie den sich aus Rotor 733 und Stator 731 zusammensetzenden Radnabenmotor 681, der an der ersten Seitenwand 661 und an der zweiten Seitenwand 663 des Radträgers 655 über die Motorbefestigungen 735, 739, 739^{I} befestigt ist. Der Radträger 655 ist ein Hohlprofil 659 in Leichtbauweise. In dem Bereich des Radträgers 655, in dem eine Felge 791 des Hinterrads 675 aus dem Radträger 655 austreten soll, hat das Profil 659 eine oberseitige Ausnehmung 715 und eine unterseitige Ausnehmung 715^{I}. Der Radnabenmotor 681 der Motor-Radträger-Anordnung 741 ist ein invers aufgebauter Motor mit außenliegendem Rotor 733, der den Stator 731 umrunden kann, um die Felge 791 des Hinterrades 675 anzutreiben.

Der Radträger 655 trägt über seine Seitenwände 661, 663 den Radnabenmotor 681, indem, wie oben schon angesprochen, der Stator 731 über die Motorbefestigungen 735, 739, 739^{I} an den Seitenwänden 661, 663 anliegt. Der Stator 731 ist über die zweite Motorbefestigung 739, 739^{I}, die durch Schrauben gebildet werden, an der einen Seitenwand, genauer an der ersten Seitenwand 661, befestigt. Als Alternative können als Verbindungselemente auch Nieten benutzt werden. Die erste Motorbefestigung 735 ist ein Gewindefortsatz, der das Radzentrum 679 fortsetzt und über eine Mutter 737 mit der zweiten Seitenwand 663 verschraubt werden kann. Durch ein Nachstellen der Mutter 737 kann eine großflächige Anlage der zweiten Seitenwand 663 an dem Stator 731 sichergestellt werden. Die notwendige Kraft, damit das Profil 659 vollflächig den Stator 731 des Radnabenmotors 681 einspannt (genauer: eine nicht elektrisch leitende Gehäusefläche des Stators 731), ist durch die Mutter 737 aufbringbar.

Die Oberseite 665 des Radträgers 255 weist an einer Stelle die erste Ausnehmung 715 auf. Die Unterseite 667 des Radträgers 655 weist an der gegenüberliegenden Stelle zu der ersten Ausnehmung 715 eine zweite Ausnehmung 715^{I} auf. Durch diese Ausnehmung 715, 715^{I} kann die Felge 791 des Hinterrads 675 aus dem Radträger 655 herausgucken. Die Ausnehmungen 715, 715^{I} sind mit Fenstern vergleichbar.

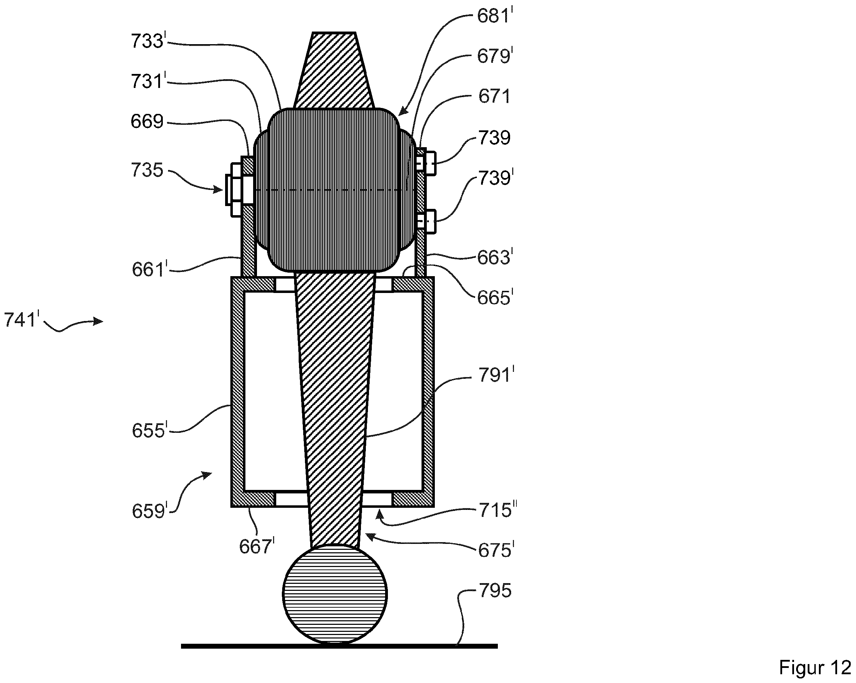

Die in Figur 12 gezeigte Radträger-Radnabenmotor-Anordnung 741^{I} besitzt einen Radträger 655^{I}, der sich durch Blechbiegeteile zusammensetzt. Die Blechbiegeteile sind zu einem Profil 659^{I} durch Nieten zusammengebaut.

Die in Figur 12 gezeigte Motor-Radträger-Anordnung 741^{I} ist ein Hohlprofil 659^{I}, das einen etwas komplexeren Radträger 655^{I} im Vergleich zu dem Radträger 655 nach Figur 11 hat. Bei dem Radträger 655^{I} (nach Figur 12) ist in dem Bereich, in dem der (Radnaben-)Motor 681^{I} sich befindet, eine erste Zunge 669 (bzw. Lasche) und eine zweite Zunge 671 (bzw. Lasche) in einer bodenabgewandten Richtung, d. h. von der Fahrbahn 795 weggewandt angeordnet. Auf der bodenzugewandten Seite, d. h. in Richtung zu der Fahrbahn 795 ist das kastenförmige Profil 659^{I}, wobei der (Radnaben-)Motor 681^{I} durch Laschen bzw. Zungen 669, 671 von der Fahrbahn 795 abgewandt, d. h. hierzu höher angeordnet ist. Der Motor 681^{I} kann durch seinen massiven Stator 731^{I} auf die Wände des Radträgers 655^{I} stabilisierend wirken. Umweltbeeinträchtigungen für den Motor 681^{I}, insbesondere für den umlaufenden Rotor 733^{I}, sind dadurch reduziert, dass der Stator 731^{I} an den Laschen 669, 671 über die Motorbefestigungen 735, 739, 739^{I} angebracht ist und die Unterseite 667^{I} des Profils 659^{I} eine gewisse Schmutzfangfunktion für das Hinterrad 675^{I} mit seiner Felge 791^{I} entfaltet.

Weil die Felge 791^{I} des Hinterrades 675^{I} schmaler als der Rotor 733^{I} des Motors 681^{I} ist, können die Ausnehmungen 715^{II} schmaler, d. h. felgenbreit bzw. reifenbreit in dem Profil 659^{I} des Radträgers 655^{I} ausgeführt sein. Dies gilt nicht nur in Bezug auf die Ausnehmungen 715^{II}, sondern insgesamt in radialer Richtung. Durch diese Öffnung, die nur feigen- oder reifenbreit (zuzüglich eines Spiels bzw. Passungsspalts) ist, wird eine Steifigkeit verbessert bzw. derart erzielt, dass mit leichteren Bauteilen die Grenze der maximalen Verwindungssteifigkeit eingehalten wird. Eine Größe für die Ausnehmung 715^{II} kann sowohl in der Oberseite 665^{I} als auch in der Unterseite 667^{I} des Radträgers 655^{I} eingelassen sein. Aus der Oberseite 665^{I} stehen die Fortsätze in Gestalt der Laschen 669, 671 der Seitenwände 661^{I}, 663^{I} empor.

Die erste Motobefestigung 735 ist fluchtend zu dem Radzentrum 679^{I} angeordnet. Im Zentrum 679^{I} des Hinterrades 675^{I} ist der Motor 681^{I} und somit das Hinterrad 675^{I} mit dem Hinterradträger 655^{I}, genauer an der Lasche 669 festgeschraubt.

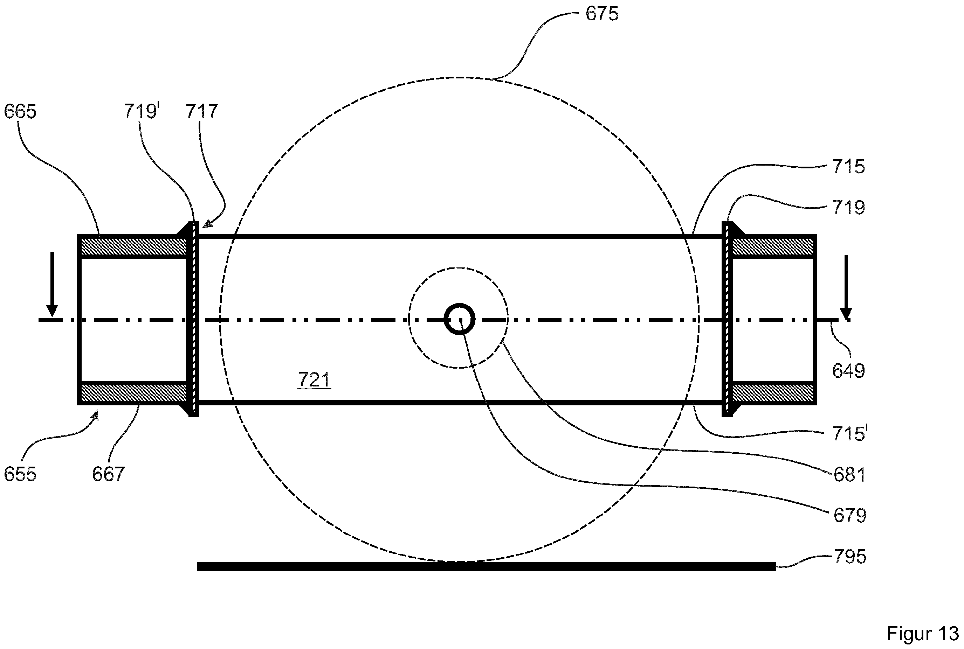

In einer seitlichen, in schematischer Weise dargestellten Schnittansicht wird in Figur 13 die aus Figur 11 bekannte Anordnung der Motor-Radträger-Anordnung 741 gezeigt, wobei das Hinterrad 675, der Radnabenmotor 681 sowie die Befestigung entlang des Radzentrums 679 nur strichliert, d. h. zu Orientierung angedeutet, eingezeichnet sind. Dort, wo das Hinterrad 675 sitzt, erfolgt die Berührung mit der Fahrbahn 795. Durch den festen Verbund über das Radzentrum 679 mit dem Radträger 655 ergibt sich eine Verwindungsfreiheit der beiden Radträger (siehe z. B. die Radträger 255, 257 nach Figur 6) zueinander, sofern von einer ebenen Fahrbahn 795 ausgegangen werden darf. Der Hinterradträger 655 mit seiner Oberseite 665 und seiner Unterseite 667 hat eine Oberseitenausnehmung 715 und eine an der Unterseite 667 sich befindende Ausnehmung 715^{I}, durch die das Hinterrad 675 aus dem Radträger 655 heraussteht. In dem Radträger 655 ist ein Radschacht 717 eingesetzt, der sich aus mehreren Wandabschnitten 719, 719^{I}, 721 zusammensetzt. Das Hinterrad 675 ist im Bereich der Radträgerachse 649, d. h. mittig des Radträgers 655 (in Bezug auf seine Höhe) befestigt. Das Hinterrad 675 steckt somit im Radschacht 717.

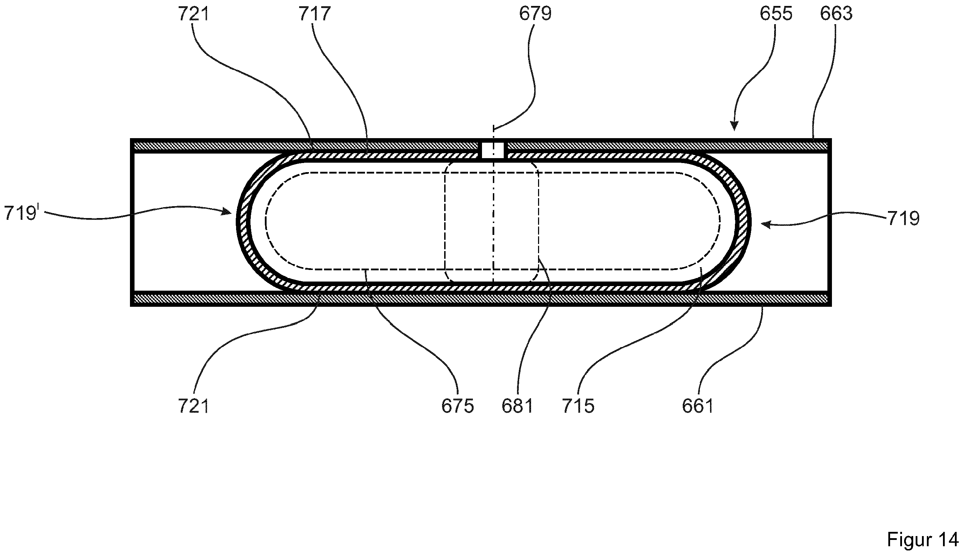

In Figur 14 ist die Anordnung aus Radschacht 717, Radträger 655, Hinterrad 675 und Radnabenmotor 681 in einer Schnittansicht von oben dargestellt. Der Radnabenmotor 681 erstreckt sich im Radzentrum 679 und befindet sich so in der Mitte des Hinterrades 675. Zwischen Hinterrad 675 und Radschacht 717 gibt es die Ausnehmung 715, d. h. der Radschacht 717 ist größer als das Hinterrad 675.

Der Radschacht 717 hat zwei gerundete Wandabschnitte 719, 719^{I} sowie parallel zu den Seitenwänden 661, 663 des Radträgers 655 laufende Wandabschnitte 721. Dadurch, dass der Radschacht 717 das Hinterrad 775 an seiner breitesten Seite schachtartig einfasst, hat der Radschacht 717 eine ovale Form mit zwei geraden, man kann auch sagen parallelen, Wandabschnitten 721 und zwei gerundeten Wandabschnitten 719, 719^{I}. Durch den Einbau eines Radschachts 717 in dem Radträger 655 wird eine Versteifung des Radträgers 655 erhöht.

In den Figuren 15 und 16 werden zwei mögliche Ausgestaltungen für einen Radträger 655", 655^{III} gezeigt, der als Hohlprofil 59, 59^{I} realisiert ist. Das Hohlprofil 59, 59^{I} hat eine Bodenplattenaufnahme 713. Die Bodenplattenaufnahme 713 ist ein entlang des Hohlprofils 59, 59^{I} vorhandener Steg, auf dem die Bodenplatte 623 herausnehmbar ruht bzw. lagert. An der Seite des Hohlprofils 59, 59^{I}, die zur Bodenplatte 623 hin orientiert ist, gibt es die in Figur 6 gezeigten beiden Führungsschienen 285, 287 in Gestalt von Verankerungskanälen 91, 91^{I} oder in Gestalt eines Kabelkanals 89 (siehe auch Figur 4 mit den Führungsschienen 85, 87). Auf der Innenseite der Radträger 255, 257 sind Führungsschienen 285, 287, die als Kanäle 89, 91, 91^{I} eine Transportbox (vgl. Transportbox 39, gezeigt in Figur 4; vgl. Transportbox 439, gezeigt in Figur 8) oder Kabel sichern können. Somit ist, wie in Figur 15 zu sehen ist, die zweite Seitenwand 663^{II} des Radträgers 655^{II} auf seiner äußeren Oberfläche mit Kanälen 91, 91^{I} ausgestattet. In der in Figur 16 gezeigten Variante des Radträgers 655^{III} ist diese zweite Seitenwand 663^{III} mit einem Kabelkanal 89 und einem hierzu parallel und beabstandet verlaufenden Verankerungskanal 91 ausgestattet.

Die (in den Figuren 15 und 16 gezeigte) aufliegende Bodenplatte 623 (auf der Bodenplattenaufnahme 713) kann durch die Transportbox 39, 439 (siehe Figuren 4 und 8) ersetzt werden. Vorteilhafterweise ist die Bodenplatte 623 fixiert, aber austauschbar. Soll das Lastenfahrrad 1, 201, 401 für eine Auslieferung von vordisponierten Gütern verwendet werden, kann eine entsprechende Transportbox 39, 439, in der die Güter gestapelt sind, an die Stelle der Bodenplatte 623 (siehe Figuren 15 und 16) in das Lastenfahrrad eingebracht werden. Soll stattdessen das Lastenfahrrad 1, 201, 401 für den Transport eines Sperrguts genutzt werden, kann die Transportbox 39, 439 durch die Bodenplatte 623 ersetzt werden, auf der das Sperrgut aufliegen kann.

Die in den einzelnen Figuren gezeigten Ausgestaltungsmöglichkeiten lassen sich auch untereinander in beliebiger Form verbinden.

Soll ein Lastenfahrrad mit einem besonders großen elektrochemischen Speicher ausgestattet werden, können Akkumulatoren wie die Akkumulatoren 511, 511^{I} nach Figur 8 und 10 sowie ein weiterer in der Generatoraufnahme anzusiedelnder Akkumulator am Rahmen des Lastenfahrrads angebracht sein. Darüber hinaus ist es natürlich auch möglich, einen oder mehrere Akkumulator (wie die Akkumulatoren 511, 511^{I}) am oder im Rahmen (z. B. am oder im Querträger, z. B. am oder im Radträger) zu befestigen (siehe z. B. Rahmen 3 nach Figur 3).

Die Führungsschienen 85, 87 (vgl. Figuren 3 und 4) bzw. 285, 287 (vgl. Figur 6) können in Gestalt von Verankerungskanälen 91, 91^{I} (vgl. Figur 15) oder auch in Gestalt von Kabelkanälen 89 (vgl. Figur 16) an jedem der (zuvor vorgestellten) Radträger 55, 255, 455, 655, 655^{I}, 655^{II}, 655^{III}, 57, 257, 457 angebracht sein, wodurch die Verwindungssteifigkeit steigerbar ist. Wird eine Transportbox 39 (vgl. Figur 4) bzw. 439 (vgl. Figur 8) zwischen Radträgern 55, 57 (vgl. Figur 4) bzw. 455, 457 (vgl. Figur 8 i. V. m. Figur 10) eingeschoben und an den Verankerungskanälen 91, 91^{I} befestigt, so schafft der Verbund aus Transportbox 39, 439 und Radträgern 55, 57, 455, 457 einen Beitrag zur Steifigkeit, genauer zur Verwindungssteifigkeit, des Lastenfahrrads 1, 401.

Eine Unterseite der Transportbox 39, 439 und eine Unterseite eines Radträgers 55, 255, 455, 655, 655^{I}, 655", 655^{III}, 57, 257, 457 sind plan; hierdurch schafft die Transportbox 39, 439 eine Versteifung zwischen den Radträgern 55, 255, 455, 655, 655^{I}, 655", 655^{III}, 57, 257, 457. Außerdem trägt eine Höhegleichheit zwischen Unterseite der Radträger 55, 255, 455, 655, 655', 655", 655^{III}, 57, 257, 457 und der Transportbox 39, 439 zur einfachen und schnellen Austauschbarkeit einer Box gegen eine andere Box bei.

Jeder der (zuvor vorgestellten) Radträger 55, 255, 455, 655, 655^{I}, 655", 655^{III}, 57, 257, 457 lässt sich durch Blechformteile, die untereinander form-, kraft- oder stoffschlüssig verbunden sind, herstellen. Jeder der (zuvor vorgestellten) Radträger 55, 255, 455, 655, 655^{I}, 655", 655^{III}, 57, 257, 457 kann auch durch ein Strangpressverfahren, z. B. als Aluminium-Profil, hergestellt sein. Auch die übrigen Träger, z. B. der Querträger 53, 453, und Rahmen, z. B. der Stützrahmen 7, 207, 407, lassen sich durch Blechformteile und/oder durch Strangpressverfahren schaffen sowie durch Verbundteile aus Blechformteilen und aus durch Strangpressverfahren hergestellte Profile schaffen. Ein Radträger 55, 255, 455, 655, 655^{I}, 655", 655^{III}, 57, 257, 457 kann sich aus Blechformteilen zusammensetzen, an dessen Seitenwand 63, 663, 663^{I} sich ein als Strangpressprofil hergestellte Führungsschiene 85, 285, 87, 287 anschließt.

Obwohl aus Gründen der besseren graphischen Veranschaulichung viele Teile in den zeichnerischen Darstellungen weggelassen worden sind, ist es nachvollziehbar, dass zumindest die Hinterräder, vorzugsweise alle Räder, mit einem Schutzblech oder einer sonstigen Abdeckung wie einem Radkasten oder Speichenabdeckungen abgedeckt sind, um z. B. einen Berührschutz vor Eingriffe in die drehenden Teile, wie z. B. zwischen die Speichen, zu bieten.

Die zuvor dargelegte Erfindung kann auch dahingehend zusammengefasst werden, dass es zum einen um einen Rahmen 5 eines Lastenfahrrads 1 geht, der z. B. in Figur 3 zu sehen ist. Ein Lastenfahrrad 1 weist einen bodenseitigen Versteifungsrahmen 5 auf. Der Versteifungsrahmen 5 hat einen Querträger 53 und einen mittleren Zentralträger 51, wobei letzterer in einem, bezüglich des Lastenfahrrads 1, vorderen Bereich 17 vorhanden ist. Zwei Radträger 55, 57 des Versteifungsrahmens 5 verlaufen parallel zum Zentralträger 51. Jeder der beiden Radträger 55, 57 hat einen eigenen, zwischen Seitenwänden 61, 63 eines Radträgers 55, 57 angeordneten Radnabenmotor 81, 83. Hierdurch ist der Versteifungsrahmen 5 verwindungssteifer ausgeführt. Der Radnabenmotor 81, 83 bildet nämlich eine Verbindung zwischen den Seitenwänden 61, 63. Zum anderen geht es um ein vorteilhaftes Herstellungsverfahren eines entsprechenden Lastenfahrrads 1. Soll ein solches Lastenfahrrad 1 mit einem bodenseitigen Versteifungsrahmen 5 hergestellt werden, wird eine relative Verwindungssteifigkeit zweier Radträger 55, 57 des Rahmens 5 zueinander durch Eigensteifigkeiten hergestellt, die durch einen in einem der Radträger 55, 57 angeordneten Antriebsmotor, z. B. einem Radnabenmotor 81, 83, hergestellt sind.

### Bezugszeichenliste

- 1, 201, 401: Lastenfahrrad
- 3, 403: (Gesamt-)Rahmen des Fahrrads
- 5, 405: bodenseitiger (Versteifungs-)Rahmen
- 7, 207, 407: Stützrahmen
- 9, 209, 409: Unterrohr, insbesondere gekröpftes Unterrohr
- 11: Gestänge
- 13: erstes Karosserieteil
- 15: zweites Karosserieteil
- 17, 417: vorderer Bereich des Rahmens
- 19: hinterer Bereich des Rahmens
- 21, 421: Laderaum bzw. Ladebereich
- 23, 223, 423, 623: Bodenplatte
- 25: Lastfläche
- 27: Fahrerraum
- 29: Sattelstütze
- 31, 231, 431: Generatoraufnahme
- 33: Rahmen für eine Antrittskurbel bzw. Generator
- 35: Fahrradsattelaufnahme
- 37, 237: Fahrradsitz bzw. Sattel
- 39, 439: Transportbox
- 649: Radträgerachse
- 51: Zentralträger
- 53, 453: Querträger
- 55, 255, 455,: erster Radträger
- 655, 655^{I}, 655", 655^{III} 57, 257, 457: zweiter Radträger
- 59, 59^{I}, 259, 659,: Profil, insbesondere als Hohlprofil, z. B. als Teil des Rahmens
- 659^{I} 61, 261, 461,: erste Seitenwand eines Radträgers
- 661, 661^{I} 63, 663, 663',: zweite Seitenwand eines Radträgers
- 663^{II}, 663^{III} 65, 265, 465,: Oberseite eines Radträgers
- 665, 665^{I}, 665", 665^{III} 67, 667, 667^{I}: Unterseite eines Radträgers
- 69, 69^{I}, 669: erste Zunge bzw. erste Lasche
- 71, 71^{I}, 671: zweite Zunge bzw. zweite Lasche
- 73, 273, 473: Vorderrad, z. B. als Einzelrad oder z. B. als Vorderradpaar
- 75, 275, 475,: erstes Hinterrad
- 675, 675^{I} 77, 277, 477: zweites Hinterrad
- 79, 279, 279',: Radzentrum
- 479, 479^{I}, 479", 679, 679^{I} 81, 681, 681^{I}: erster Motor, insbesondere Radnabenmotor
- 83: zweiter Motor, insbesondere Radnabenmotor
- 85, 285: erste Führungsschiene
- 87, 287: zweite Führungsschiene
- 89: Kabelkanal
- 91, 91^{I}: Verankerungskanal
- 93, 293: Lenker
- 95, 495: Gabel
- 97, 497: Steuerrohr
- 99, 299: Gabelrohr
- 101, 101', 301,: Gabelscheide
- 501, 501^{I} 103, 503: untere Gabelbrücke
- 105, 505: mittlere Gabelbrücke
- 107, 307: obere Gabelbrücke
- 509: Tretkurbelradius
- 511, 511^{I}: Akkumulator
- 713: Bodenplattenaufnahme
- 515, 715, 715^{I},: Ausnehmung, insbesondere im Radträger
- 715" 717: Radschacht
- 719, 719^{I}: Wandabschnitt, insbesondere gerundet des Radschachts
- 721: Wandabschnitt, insbesondere parallel zu einer Seitenwand des Radträgers
- 731, 731^{I}: Stator
- 733, 733^{I}: Rotor
- 735: erste Motorbefestigung
- 737: Mutter, insbesondere selbstsichernde Mutter
- 739, 739^{I}: zweite Motorbefestigung
- 741, 741^{I}: (Motor-)Radträger-Anordnung
- 581: erste Radnabenantriebswelle
- 583: zweite Radnabenantriebswelle
- 791, 791^{I}: Felge
- 795: Fahrbahn

- Q: Querrichtung
- V: Fahrtrichtung
- F: Flucht, insbesondere der Radnabenmotoren

## Patentansprüche

1. Lastenfahrrad (1, 201, 401) mit einem bodenseitigen Versteifungsrahmen (5, 405),
der einen mittleren, in einem in dem Lastenfahrrad (1, 201, 401) vorderen Bereich ausgerichteten Zentralträger (51), einen Querträger (53, 453) und zwei parallel zum Zentralträger (51) verlaufende, jedoch vorzugsweise versetzt zum Zentralträger (51) angeordnete, Radträger (55, 255, 455, 655, 655', 655", 655^{III}, 57, 257, 457) hat,
**dadurch gekennzeichnet, dass**
jeder der beiden Radträger (55, 255, 455, 655, 655^{I}, 655", 655^{III}, 57, 257, 457) je durch einen, zwischen Seitenwänden (61, 261, 461, 661, 661^{I}, 63, 663, 663^{I}, 663", 663^{III}) eines Radträgers (55, 255, 455, 655, 655^{I}, 655", 655^{III}, 57, 257, 457) angeordneten Radnabenmotor (81, 681, 681^{I}, 83) verwindungssteif ausgeführt ist,
indem der Radnabenmotor (81, 681, 681^{I}, 83) eine Verbindung zwischen den Seitenwänden (61, 261, 461, 661, 661^{I}, 63, 663, 663^{I}, 663", 663^{III}) ist,
wodurch insbesondere der Versteifungsrahmen (5, 405) seine verwindungsfeste Lasttragfähigkeit erhält.

2. Lastenfahrrad (1, 201, 401) nach Anspruch 1,
**dadurch gekennzeichnet, dass**
der Zentralträger (51) und/oder der Radträger (55, 255, 455, 655, 655^{I}, 655", 655^{III}, 57, 257, 457) ein stranggepresstes Hohlprofil (59, 59^{I}, 259, 659, 659^{I}) ist,
z. B. mit einer Wandstärke zwischen 2 mm und 6 mm,
das insbesondere höher als breit ist,
z. B. ein Vier-Kant-Profil mit jeweils zwei gleichen Seiten ist,
sodass insbesondere die beiden Seitenwände breiter sind als eine Oberseite und eine Unterseite des Hohlprofils (59, 59^{I}, 259, 659, 659^{I}),
vorzugsweise die Oberseite maximal 60 mm breit ist.

3. Lastenfahrrad (1, 201, 401) nach einem der vorhergehenden Ansprüche,
**dadurch gekennzeichnet, dass**
auf dem Zentralträger (51) eine Stütze (29) für einen Fahrradsitz (37, 237) angebracht ist.

4. Lastenfahrrad (1, 201, 401) nach einem der vorhergehenden Ansprüche,
**dadurch gekennzeichnet, dass**
das Lastenfahrrad (1, 201, 401) ein zwei Hinterräder (75, 275, 475, 675, 675^{I}, 77, 277, 477) aufweisendes, vorzugsweise mit einem im hinteren Bereich (19) angeordneten Ladebereich (21, 421) ausgestattetes, Schmalspurfahrzeug ist, wobei insbesondere einer der Radnabenmotoren (81, 681, 681^{I}, 83) in einem der beiden Hinterräder (75, 275, 475, 675, 675^{I}, 77, 277, 477) in Querrichtung (Q) zu einer Fahrtrichtung (V) des Lastenfahrrads (1, 201, 401) und/oder mit einer Rotationsachse eines Rotors (733, 733') des Radnabenmotors (81, 681, 681^{I}, 83) in einer Quererstreckung von dem ersten Hinterrad (75, 275, 475, 675, 675^{I}) zu dem zweiten Hinterrad (77, 277, 477) verlaufend angeordnet ist.

5. Lastenfahrrad (1, 201, 401) nach Anspruch 4,
**dadurch gekennzeichnet, dass**
einer der Radnabenmotoren (81, 681, 681^{I}, 83) als Antrieb für eines der beiden Hinterräder (75, 275, 475, 675, 675^{I}, 77, 277, 477) des Lastenfahrrads (1, 201, 401) gestaltet ist,
wobei beide Radnabenmotoren (81, 681, 681^{I}, 83) jeweils an einem der beiden Radträger (55, 255, 455, 655, 655', 655", 655^{III}, 57, 257, 457),
vorzugsweise punktkonzentriert,
befestigt sind,
insbesondere in der Gestalt, dass die Radnabenmotoren (81, 681, 681^{I}, 83) fluchtend befestigt sind.

6. Lastenfahrrad (1, 201, 401) nach einem der vorhergehenden Ansprüche,
**dadurch gekennzeichnet, dass**
der bodenseitige Versteifungsrahmen (5, 405) eine Basis für ein vor und/oder hinter einem Fahrersitz (37, 237) angeordnetes Gestänge (11) bildet,
wobei das Gestänge vorzugsweise einen Käfig als Tragrahmen für Karosserieteile (13, 15) bildet.

7. Lastenfahrrad (1, 201, 401) nach einem der vorhergehenden Ansprüche,
**dadurch gekennzeichnet, dass**
ein Radzentrum (79, 279, 279^{I}, 479, 479^{I}, 479", 679, 679^{I}) entweder an an einem Radträger (55, 455, 655^{I}, 655", 655^{III}, 57) angebrachten Zungen (69, 69^{I}, 669, 71, 71^{I}, 671) gehalten oder in einem Inneren des Radträgers (255, 655, 257, 457) positioniert und/oder befestigt ist.

8. Lastenfahrrad (1, 201, 401) nach einem der vorhergehenden Ansprüche,
**dadurch gekennzeichnet, dass**
auf einer zu einer Lastfläche (25) zugewandten Seite eines Radträgers (55, 57, 255, 257, 655", 655^{III}) wenigstens eine, vorzugsweise zwei, Führungsschienen (85, 285, 87, 287) angebracht sind,
von denen vorzugsweise wenigstens eine Führungsschiene (85, 285, 87, 287) entweder ein Kabelkanal (89) oder ein Verankerungskanal (91, 91^{I}) für eine Traglast, wie z. B. eine Transportbox (439), ist.

9. Lastenfahrrad (1, 201, 401) nach einem der Ansprüche 4 bis 8,
**dadurch gekennzeichnet, dass**
ein Hinterrad (75, 275, 475, 675, 675^{I}, 77, 277, 477) ein Speichenrad ist,
das vorzugsweise nicht größer als ein 30 Zoll Rad ist.

10. Lastenfahrrad (1, 201, 401) nach einem der vorhergehenden Ansprüche,
**dadurch gekennzeichnet, dass**
seitlich zu dem Zentralträger (51) ein Stützrahmen (7, 207, 407) von einem vorderen Punkt des Zentralträgers (51) zu dem Querträger (53) oder zu den Radträgern (255, 257) führt.

11. Lastenfahrrad (1, 201, 401) nach einem der vorhergehenden Ansprüche,
**dadurch gekennzeichnet, dass**
der Zentralträger (51) ein Träger für eine Antrittskurbel und/oder einen Generator ist.

12. Lastenfahrrad (1, 201, 401) nach einem der vorhergehenden Ansprüche,
**dadurch gekennzeichnet, dass**
die Radträger (55, 255, 455, 655, 655^{I}, 655", 655^{III}, 57, 257, 457) über eine Bodenplatte (23, 223, 423, 623) zwischen sich, idealerweise fluchtend zu den Unterseiten (67, 667, 667^{I}) der Radträger, miteinander verbunden sind.

13. Lastenfahrrad (1, 201, 401) nach einem der Ansprüche 4 bis 12,
**dadurch gekennzeichnet, dass**
zumindest ein Hinterrad (75, 275, 475, 675, 675^{I}, 77, 277, 477) unmittelbar und direkt, insbesondere durch eine einstückige Radhalterung des Radträgers (255, 655, 257, 457), in dem Radträger (255, 655, 257, 457) aufgenommen ist und gehalten wird,
wobei vorzugsweise die Radhalterung eine zusammenhängende, eine aus dem Radträger einstückig Teil dessen gebildete und eine aus diesem hervortretende flanschartige Aufnahme für den Radnabenmotor (81, 681, 681^{I}, 83) ist.

14. Lastenfahrrad (1, 201, 401) nach einem der Ansprüche 2 bis 13,
**dadurch gekennzeichnet, dass**
mindestens eine Ausnehmung (515, 715, 715^{I}, 715"), insbesondere eine bodenseitige Ausnehmung, vorzugsweise eine an einer Unterseite (67, 667, 667^{I}) des Radträgers (55, 57, 455, 457, 655, 655^{I}) vorhandene bodenseitige Ausnehmung, und eine an der Oberseite (65, 465, 665, 665^{I}) des Radträgers (55, 57, 455, 457, 655, 655^{I}) angeordnete Ausnehmung (515, 715, 715^{I}, 715"), maximal 10% breiter ist als eine Reifenbreite und/oder eine Felgenbreite,
wobei die Ausnehmung (515, 715, 715^{I}, 715") vorzugsweise in axialer Richtung und in radialer Richtung im Wesentlichen einer Breite einer Felge (791, 791^{I}) oder eines Reifens, der durch den Radträger (455, 655, 655^{I}, 457) hindurchreicht, entspricht.

15. Lastenfahrrad (1, 201, 401) nach einem der vorhergehenden Ansprüche,
**dadurch gekennzeichnet, dass**
in einem Inneren des Radträgers (655) ein Radschacht (717) einen Aufnahmeraum für einen Teil eines Rades (75, 275, 475, 675, 675^{I}, 77, 277, 477) bildet,
wobei der Radschacht (717) vorzugsweise an Wänden (721) des Radträgers (655), z. B. stoffschlüssig, anschließt.

16. Lastenfahrrad (1, 201, 401) nach einem der vorhergehenden Ansprüche,
**dadurch gekennzeichnet, dass**
in zumindest einem Träger wie Querträger (453) oder Radträger ein Akkumulator (511, 511^{I}) angebracht ist oder ein Träger wie Querträger (453) oder Radträger einen Akkumulator (511, 511^{I}) trägt.

17. Verfahren zur Herstellung einer Verwindungsstabilität bei einem Lastenfahrrad (1, 201, 401) mit einem bodenseitigen Rahmen (3, 403),
**dadurch gekennzeichnet, dass**
eine Verwindungssteifigkeit zwischen zwei Radträgern (55, 255, 455, 655, 655^{I}, 655", 655^{III}, 57, 257, 457) des Rahmens (3, 403, 5, 405) durch eine Eigensteifigkeit eines in einem der Radträger (55, 255, 455, 655, 655^{I}, 655", 655^{III}, 57, 257, 457) angeordneten Antriebsmotors, z. B. einem Radnabenmotor (81, 681, 681', 83), hergestellt wird.
